# EUROPEAN PATENT SPECIFICATION

(11) **EP 0 411 659 B1**
(45) Date of publication and mention of the grant of the patent: **09.10.1996**
(21) Application number: 90114972.4
(22) Date of filing: 03.08.1990
(51) Int. Cl.: B31B 23/26, B31B 1/90, B65H 20/24, B31B 23/90

(54) **Plastic film bag manufacturing apparatus and associated method**
Vorrichtung zur Herstellung von Kunststoffbeuteln und entsprechende Herstellungsmethode
Procédé et dispositif pour la fabrication des sacs en matière plastique

(30) Priority: 04.08.1989 US 389757
(43) Date of publication of application: 06.02.1991
(73) Proprietor: Marrelli, John C., Tustin, CA 92680 (US)
(72) Inventor: Rutledge, Gary L., Dallas, Texas 75248 (US); Pitcher, Edgar R., Dallas, Texas 75240 (US)
(74) Representative: Klunker . Schmitt-Nilson . Hirsch

(56) References cited:
- EP-A- 0 315 176
- AT-B- 325 406
- AT-B- 344 073

## Description

The present invention relates to a web handling apparatus according to the pre-characterizing part of claim 1. An apparatus of this type is shown in EP-A-0 315 176. The invention also relates to a method of establishing slack web loops according to the preamble of claim 24.

In the manufacture of plastic film bags it is common practice to form them, by continuously extruding plastic film in tubular form, flattening the film tube to form a double layer "web", forming lateral weld lines and perforation lines across the web to define the individual bags which may be subsequently separated from one another at the perforation lines, and then laterally folding the web prior to packaging of the bags. The laterally folded film web is then typically delivered to a packaging station spaced apart from the bag forming station, at a linear receiving speed identical to the linear output speed of the bag forming station, where it is rolled or folded for packaging.

Said EP-A-0 315 176 does not clearly disclose how the web is stopped during the performance of a particular modification operation thereon. There are presently two methods for effecting this necessary momentary stoppage of the web as each individual bag passes the modification station - neither of which is wholly satisfactory. First, both the bag forming station output feed portion and the packaging station input drive may be synchronously operated in a start-stop fashion to incrementally advance and then stop the entire folded film web section extending between these two operating stations. While this is a quite logical approach, it significantly slows the overall bag production rate - a rate which must be kept as high as possible for profitability purposes.

Second, a rather complex, high mass, shiftable multi-roller structure may be utilized to engage and intermittently stop a portion of the folded plastic film web between the bag forming station and the winder without slowing or interrupting the output and input web travel at these portions of the overall bag forming apparatus. However, this high mass roller structure must be very rapidly shifted back and forth to stop each individual bag received thereby during the high speed bag forming process. Because of the rapidity with which the multi-roller structure must be intermittently shifted back and forth, very high shift forces result, requiring substantial power and precision control. If the multi-roller structure is not precisely designed and adjusted, these high shift forces can easily tear the travelling film web at one of its perforation lines, creating significant down time and waste in the bag manufacturing process.

In view of the foregoing it is the object of this invention to provide for an apparatus and a method for momentarily stopping each individual bag in the film web, during its movement between the bag forming station and the winder. This is achieved in accordance with the features of claims 1 and 24, respectively.

In carrying out principles of the present invention, in accordance with a preferred embodiment thereof, an in-line closure tie element attachment machine is positioned between a plastic film bag forming station, which continuously produces a folded plastic film web divided into individual bags by longitudinally spaced perforation lines, and a winder mechanism which forcibly captures the folded web at a continuous linear velocity equal to the continuous linear output velocity of the bag forming station. A web handling portion of the flexible tie element attachment machine grips the moving web, and advances it toward the winder, with driven roller means including an inlet drive roller, an outlet drive roller spaced apart from the inlet drive roller toward the winder mechanism and a central drive roller positioned between the inlet and outlet drive rollers in a laterally spaced, parallel relationship therewith.

Positioned beneath these three drive rollers are first and second intercommunicating vacuum bins, the first vacuum bin having an open upper end position generally between the inlet and central drive rollers, and the second vacuum bin having an open upper end positioned generally between the central and outlet drive rollers. Vacuum pump means are connected to lower end portions of the bins for creating vacuums therein during machine operation.

As the folded web is drawn through the web handling portion of the tie element attachment machine by the three drive rollers, control means associated with the machine rotate the inlet and outlet drive rollers at continuous speeds respectively corresponding to the linear web output and intake speeds of the bag forming station and the winder mechanism. However, the control means intermittently operate the central drive roller, preferably via a stepper motor, in a manner such that the central drive roller is sequentially stopped, accelerated to a rotational drive speed higher than those of the inlet and outlet rollers, decelerated, and then stopped again.

Each sequential stop-to-stop drive cycle of the stepper motor-driven central roller longitudinally advances the portion of the web engaged by such roller a predetermined distance so that corresponding longitudinal sections of the individual bags, to which flexible tie elements are to be attached, are successively and momentarily stopped on the central drive roller, at which time a tie element attachment portion of the machine affixes a tie element to the stopped bag.

During operation of the tie element attachment machine first and second slack portions of the advancing web are respectively positioned between the inlet and central drive rollers, and between the central and outlet driver rollers. The vacuums formed in the first and second vacuum bins exert yielding, downwardly directed forces on the first and second slack web portions, created by air pressure differentials across the web portions, pulling web portions downwardly into the bins and positively, but rather gently, holding them in downwardly extending first and second web loop configurations.

At the time the central drive roller is initially stopped, to stationarily position one of the bags for tie element attachment thereto, the first web loop is considerably longer than the second web loop. During tie element attachment to the momentarily stopped bag portion of the web, the first web loop lengthens, and the second web loop shortens, within their respective vacuum bins as the inlet and outlet drive rollers continue to be driven at constant rotational speeds, the outlet roller taking slack out of the second loop while the inlet roller adds slack to the second web loop. The slack takeup capability provided by the vacuum-supported second loop prevents the still-running outlet drive roller from imposing tension force on the web sufficient to tear it at one of its perforation lines positioned on the second loop. Additionally, the slack provided in the two web loops permits sequential bag stoppage without altering or interrupting the continuous, constant linear web output and intake velocities at the bag forming station and the packaging station winder mechanism, respectively. Accordingly, a very high bag production rate may be maintained.

After its tie element is attached to the momentarily stopped bag, the central drive roller is accelerated, held at a constant elevated speed, decelerated, and then re-stopped, as previously described, to stop the next longitudinally successive bag thereon for tie element attachment thereto. This rotation cycle of the central drive roller takes up slack in the lengthened first loop, and adds the taken-up slack to the shortened second loop, to return the two web loops to their original length relationship at the time the central drive roller is stopped at the end of its drive cycle. The rapid take-up of the slack in the first loop is achieved against the yielding, downwardly directed vacuum force thereon so that the web is not torn at one of the perforation lines in its first loop portion. Additionally, this slack take-up and loop length readjustment does not alter or interrupt the constant velocity of the web entering and exiting the tie element attachment machine.

The control means may be adjusted to compensate for different bag lengths being run through the machine, and the vacuum bins are provided with movably adjustable front side walls to compensate for changes in the width of the particular folded plastic film web upon which the individual bags are formed.

The lengths of the vertically oscillating web loops within the first and second vacuum bins are continuously monitored by means of vertically spaced series of photoelectric beam transmitters and associated receivers which input loop positional information to the control means to permit appropriate corrective action to be taken should either of the loops become too long or too short during machine operation.

Additionally, the longitudinal position of each successive bag stopped on the central drive roller is continuously monitored by a unique perforation detection system which senses the position of the openable end perforation line of each bag just before the bag is stopped on the central drive roller. The perforation detection system, in a preferred embodiment thereof, includes a high voltage electrode member spaced horizontally apart from an insulation-housed conductor supported on a central common wall structure separating the first and second vacuum bins. The electrode is pivotably supported within the first vacuum bin and, in the event that the first web loop greatly shortens, is adapted to be engaged by the shortened loop and be swung out of the first bin to prevent web tearing or separation at one of the perforation lines.

The folded web portion approaching the central drive roller is routed between the electrode and the conductor so that the web perforation lines successively pass therebetween. A high voltage is suitably impressed on the electrode so that as each perforation line vertically passes the electrode the electrode discharges to the conductor through the passing perforation area, thereby energizing an associated current sensor. Energization of the current sensor causes it to transmit an output signal to a microprocessor portion of the control means indicating the passage of another perforation line past the electrode. This information is appropriately correlated to the rotational drive characteristics of the central drive roller to continuously monitor the longitudinal orientation of each individual bag stopped thereon.

In the event that the individual bags begin to be longitudinally mispositioned relative to the central drive roller at which they momentarily stopped (due, for example, to minor drive roller slippage), the microprocessor automatically adjusts the rotation of the central drive roller to correct the mispositioning.

The tie element attachment portion of the machine is pivotally mounted on the web handling portion thereof, above the inlet and central drive rollers, and rotationally supports a supply roll of an elongated plastic film web used to form the individual tie elements. During operation of the machine the plastic film web on the tie element supply roll is pulled therefrom and incrementally advanced, above the inlet and central drive rollers and the folded plastic film bag web, toward the winder mechanism. As the tie element web approaches the central drive roller a slitter knife transversely cuts it into the individual flexible tie elements which are sequentially moved to positions directly over the central drive roller, and the stopped longitudinal bag sections thereon, by a vacuum belt.

The inner end of each tie element is then heat welded to a gusseted side edge portion of its associated bag, adjacent the openable end thereof, by means of a first reciprocating heating die which also forms a slit through the inner tie element end portion and the underlying gusseted side edge portion of the bag.

The heat weld on the inner end of the tie element extends through all four plastic film layers of the gusseted side edge portion of the associated bag. Accordingly, very high strength connection is achieved between the flexible tie element and its associated bag.

To maintain each tie element in an extended position across an outer side surface of its laterally folded bag, to facilitate packaging of the bags, the outer end of each tie element is releasably restrained against such outer side surface of its laterally folded bag. While this releasable restraint can be accomplished in a variety of manners, it is accomplished in a preferred embodiment of the present invention using a second reciprocating heating die which functions to form by both mechanical force and thermal deformation, a series of "dimples" in each outer tie element end which extend into corresponding depressions formed in the underlying layer of plastic bag film. The interlock between these dimples and bag film depressions keep the tie elements from flapping about during packaging of their associated bags, but later permit each outer tie element end to be easily separated from its associated bag without tearing a hole in the bag.

When a bag is ultimately detached from the laterally folded plastic film web, the outer tie element is simply pulled outwardly from and. detached from the bag. The tie element is then looped around the open bag end to form a tightening loop therearound. Finally, the now detached outer tie element end is passed through the slit in the inner tie element end and pulled to tighten the tie element loop around the open bag end and tightly close it. The slit length is preferably somewhat shorter than the tie element width so that as the tie element is passed through the slit the tie element is crumpled and gathered in a manner inhibiting loosening of the tie element loop around the bag.

The tie element attachment machine may be conveniently placed "in-line" in an existing plastic film bag forming system, and the web handling portion of the machine may be used to sequentially stop spaced longitudinal sections of the continuously moving bag web for purposes other than tie element attachment.

### BRIEF DESCRIPTION OF THE DRAWINGS

Fig. 1 is a simplified schematic side elevational view of a conventional in-line plastic film bag manufacturing system in which a tie element attachment machine of the present invention is operably interposed to attach to each of the individual bag portions of the moving plastic film web a flexible plastic film tie element which may be wrapped and cinched around the open bag end to tightly close it;
Fig. 1A is an enlarged scale, horizontally foreshortened cross-sectional view, taken along line 1A-1A of Fig. 1, through a side edge-gusseted plastic film web being produced by the system;
Fig. 2 is a top plan view of the moving plastic film web, prior to its entry into the tie element attachment machine, taken along line 2-2 of Fig. 1;
Fig. 3 is a top plan view of the moving plastic film web, exiting the tie element attachment machine, taken along line 3-3 of Fig. 1;
Fig. 4 is an enlarged scale, horizontally foreshortened cross-sectional view through the moving plastic film web, taken along line 4-4 of Fig. 2, illustrating the representative manner in which it is laterally folded;
Fig. 4A is a cross-sectional view of a non-gusseted alternate embodiment of the overhanging right side edge portion of the plastic film web depicted in Fig. 4;
Fig. 5 is an enlargement of the circled area "5" in Fig. 3;
Fig. 6 is an enlargement of the circled area "6" in Fig. 5;
Fig. 6A is an enlarged scale partial cross-sectional view through the film web, and the inner end of a flexible tie element, taken along line 6A-6A of Fig. 6;
Fig. 7 is an enlargement of the circled area "7" in Fig. 5;
Fig. 7A is an enlarged scale partial cross-sectional view through an outer tie element end, and an underlying bag web portion, taken along line 7A-7A of Fig. 7;
Fig. 8 is a perspective view of a portion of one of the plastic bags and illustrates the manner in which its associated tie element may be used to tightly close the bag;
Fig. 9 is an enlarged scale, somewhat simplified perspective view of the tie element attachment machine;
Fig. 10 is an enlarged scale partial cross-sectional view through the tie element attachment machine taken along line 10-10 of Fig. 9;
Figs. 11 and 11A are schematic cross-sectional views taken through the tie element attachment machine along line 11-11 of Fig. 9, and sequentially illustrate the alternating movement of two slack plastic film web portions disposed within a vacuum bin section of the machine;
Fig. 12 is a schematic control diagram illustrating the feedback microprocessor control of inlet, outlet and central film web drive roller portions of the tie element attachment machine;
Fig. 13 is an enlarged scale fragmentary perspective view of a bag perforation detection system portion of the tie element attachment machine;
Fig. 14 is a schematic cross-sectional view through the perforation detection system, taken generally along line 14-14 of Fig. 13, and additionally illustrates certain control circuitry associated therewith; and
Fig. 15 is a front side elevational view of a main control panel portion of the tie element attachment machine.

### DETAILED DESCRIPTION

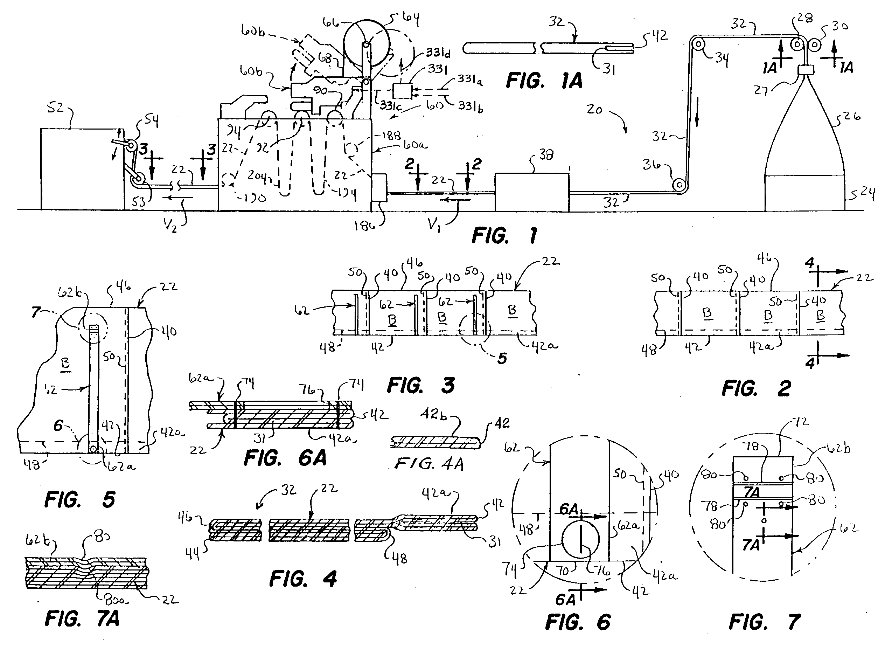

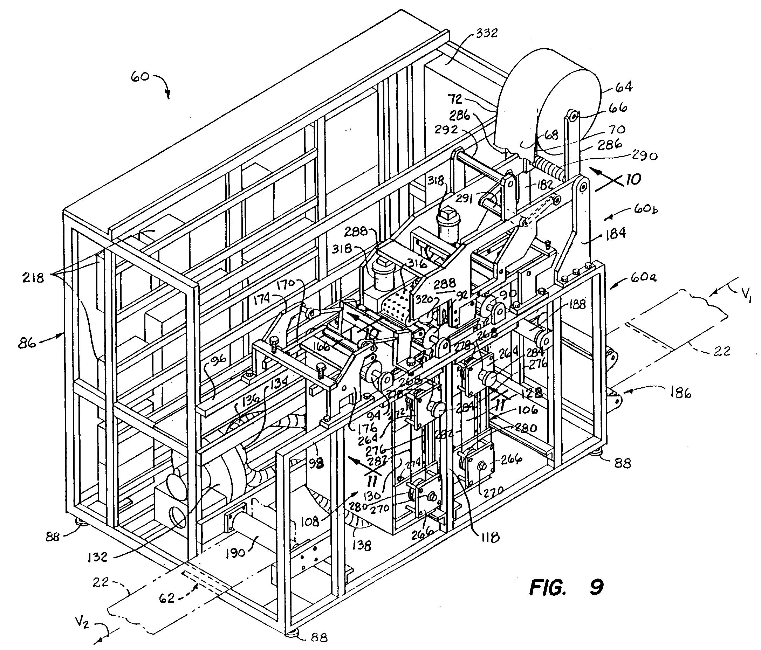

Schematically illustrated in Fig. 1 is a plastic film bag forming station 20 which, during operation thereof, outputs a laterally folded plastic film web 22 (see also Figs. 2 and 3) at a constant linear longitudinal speed V₁. The bag forming station 20 includes a plastic extrusion die 24 which continuously extrudes, in an upward direction, a plastic film tube 26. Tube 26 is passed upwardly through a gusset forming structure 27, and then between a pair of flattening rollers 28 and 30, to convert the tube to a flattened tube or "web" 32 (see also Fig. 1A) exiting the rollers 28, 30 and having a side edge portion 42 with an inwardly extending gusset 31 extending along its length, the gusset being defined by four layers of plastic film. After its exit from the rollers 28 and 30, the web 32 is sequentially passed over the rollers 34 and 36 and fed through a heat sealing, folding and perforation apparatus 38.

The schematically depicted apparatus 38, as its name implies, sequentially performs three operations on the web 32 traversing the apparatus. First, it forms on the web a longitudinally spaced series of laterally extending heat seal weld lines 40, each of which extends between the side edge 42 of the web 32 and its opposite side edge 44 (see Fig. 4).

Next, as cross-sectionally illustrated in Fig. 4, the web 32 is laterally folded along the longitudinally extending fold lines 46 and 48, the fold line 46 being laterally aligned with the side edge 44, and the fold line 48 being laterally inset from the side edge 42. As best seen in Fig. 4, the lateral inset of the fold line 48 causes a side edge portion 42ₐ (containing the gusset 31) to extend laterally beyond the balance of the laterally folded, flattened film tube which ultimately defines the laterally folded plastic film web 22. The number of folds in the folded web 22 are, of course, merely representative - a greater or lesser number of folds could be formed.

After the web 32 has been heat sealed along lines 40, and laterally folded as just described to create the folded web 22, the apparatus 38 operates to form on the folded web 22 a longitudinally spaced series of laterally extending perforation lines 50 which extend completely across and through the laterally folded, web 22. As illustrated in Fig. 2, each of the perforation lines 50 is positioned leftwardly adjacent one of the heat seal lines 40. AccQrdingly, the heat seal lines 40 and the perforation lines 50 form on the laterally folded plastic film web 22 exiting the apparatus 38 a longitudinal series of laterally folded individual plastic film bags B which may ultimately be separated from one another by tearing the film web 22 along the perforation lines 50. When this is done, each individual bag, in the usual manner, has an openable end extending along one of the perforation lines 50, and a closed, opposite end extending along one of the heat seal lines 40.

Referring again to Fig. 1, the laterally folded plastic film web 22 exiting the apparatus portion 38 of the bag forming station 20 is forcibly captured in a conventional winder mechanism 52, spaced apart in a leftward direction from the bag forming station apparatus 38, at a constant linear speed V₂ equal to the linear output velocity V₁ of the film web 22 from the bag forming station 20. To provide tension control therefor, the folded web 22 is passed beneath a stationary roller 53, and over a pivotally mounted dancer roller 54 prior to being drawn into the winder mechanism 52 wherein it is wound upon a suitable storage roll (not illustrated).

Operably interposed between the bag forming station apparatus 38 and the winder mechanism 52 is a tie element attachment machine 60 which, as subsequently described, is utilized to secure to each of the individual bags B, adjacent its openable end, a plastic film closure tie element 62 as illustrated in Figs. 3 and 5 which are top plan views of the laterally folded plastic film web 22 as it exits the machine 60. Machine 60 basically comprises a web handling portion 60ₐ, and a closure tie element attachment portion 60_{b} which is mounted atop the web handling portion 60ₐ and is pivotable relative thereto between a lowered operating position (shown in solid lines in Fig. 1) and a raised access position (shown in phantom in Fig. 1).

As will be seen, the web handling portion 60ₐ operates to engage and leftwardly drive a longitudinally central portion of the folded web 22, positioned between the apparatus 38 and the winder mechanism 52, and to sequentially and momentarily stop each of the individual bags B and stationarily position a longitudinal section thereof for attachment thereto of the bag's associated closure tie element 62. Importantly, this intermittent stoppage of each of the individual bags moving from the apparatus 38 to the winder mechanism 52 is effected without appreciably altering the web output and intake linear velocities V₁ and V₂ and without imposing upon the longitudinally moving web 22 undesirably high longitudinal tension forces which might otherwise tear the web at one of its perforation lines 50.

The tie element attachment portion 60_{b} of the machine 60 is appropriately synchronized with the web handling portion 60ₐ, and is operative to form the individual tie elements 62, from a plastic film supply roll 64, and attach the formed tie elements to the sequentially stopped longitudinal sections of the individual bags B.

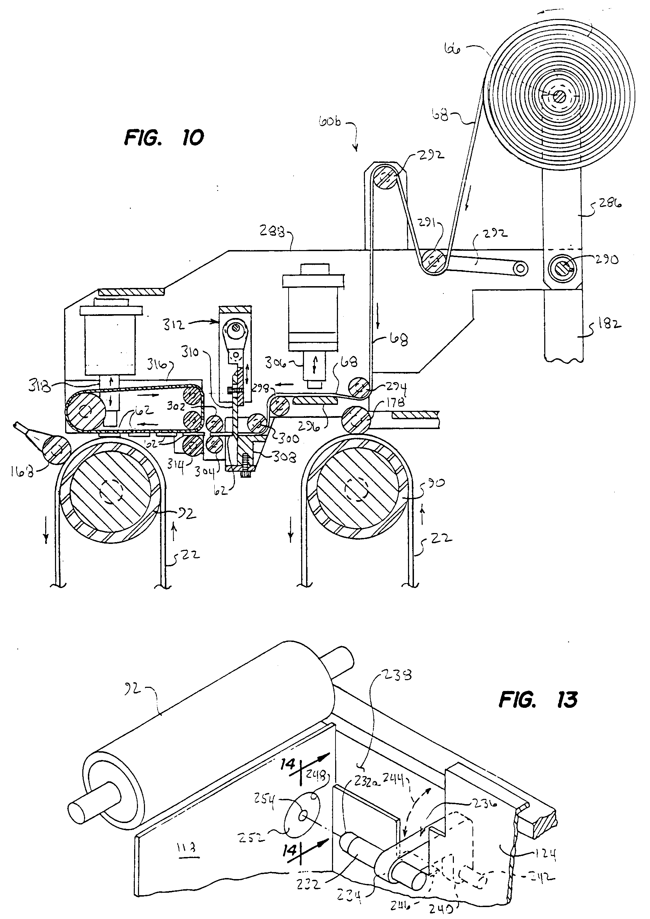

Before describing in detail the structure and operation of the tie element attachment machine 60, certain features of the tie elements 62 will be briefly described with reference to Figs. 1 and 5-8. The representatively illustrated tie element supply roll 64 is formed from a lateral half of an elongated, flattened plastic film tube which has been cut along its central longitudinal axis with a heated slitting knife or wire. The lateral flattened web half used to form the tie element supply roll 64 thus defines an elongated, dual layer plastic film web 68 (Fig. 10) having a folded side edge 70 (Fig. 9), and an opposite, heat sealed edge 72 which was previously formed by the heated slitting knife or wire. It will be appreciated that, depending upon how the tie element web 68 was initially formed, both of the edges 70, 72 could be heat sealed edges. As will be seen, the web 68 is drawn through the tie element attachment portion 60_{b} of the machine 60 and is laterally cut into elongated strips that define the tie elements 62 which are secured to the individual bags B.

As best seen in Figs. 5-7, each of the tie elements 62 has an inner end portion 62ₐ which includes a portion of the folded side edge 70 of the tie element web 68 and overlies the overhanging side edge portion 42ₐ of the laterally folded plastic film web 22. The tie element inner end portion 62ₐ is firmly secured to the web side edge portion 42ₐ by means of a circular heat web 74. As best illustrated in Fig. 6A, the held weld 74 extends through all four plastic film layers of the gusseted side edge portion 42ₐ of the folded web 22.

A longitudinally extending slit 76 is formed through-the tie element end portion 62ₐ, and the underlying web side edge portion 42ₐ, and is positioned within the circular heat weld 74. From its secured inner end portion 62ₐ, the tie element 62 extends longitudinally across the upper side surface of the folded web 22, with the tie element 62 being parallel to and adjacent the perforation line 50 that defines the openable end of the individual bag with which the particular tie element is associated.

The anchoring of the inner end of each tie element 62 (by the circular heat weld line 74) to all four layers of the gusseted side edge portion 42a of the folded web 22 provides a very strong interconnection between each tie element and its associated bag B. However, if desired, the side edge gusset 31 could be omitted (by omission of the gusset forming structure 27 shown in Fig. 1) so that the overhanging side edge portion of the folded web 22 would have only two plastic film layers (see the alternate side edge portion 42b in Fig. 4A). The inner end of each tie element 62 would then be heat welded (along the circular weld line 74) to the two film layers of the modified side edge portion 42b.

Each of the tie elements 62 also has an outer end portion 62_{b}, containing a portion of the heat sealed side edge 72 of the tie element web 68, which is positioned laterally inwardly of the web fold 46. The heat sealed joint at the outer end of the tie element 62 is not particularly strong due to the fact that it was formed by a heat slitting knife or wire. Accordingly, a pair of laterally extending heat weld lines 78 are formed on the tie element 62 adjacent its outer end, in a manner subsequently described, to more firmly intersecure the two plastic film layers of the tie element in that region.

To releasably restrain the tie element 62 in place across the top side of the laterally folded plastic film web 22, so that the web 22 and the attached tie elements 62 may be smoothly drawn into the winder mechanism 52, five small dimples 80 (see Figs. 7 and 7A) are formed in the outer tie element end 62b and are received in corresponding depressions 80a in the plastic web film layer beneath the tie element. As subsequently described, a heated die is used to form these dimples and depressions which are formed by a combination of mechanical force and thermoplastic distortion without appreciably heat welding the tie element end 62b to its associated bag. Accordingly, the tie element end 62b can later be pulled apart from the bag without tearing the bag. To use a tie element 62 to tie off and close the open end of its associated bag B, the outer end of the tie element 62 is simply pulled apart from the bag film layer to which it is releasably restrained by the interlocking dimples 80 and depressions 80a. After this is done, the tie element 62 remains very firmly anchored to its associated bag B by the circular heat weld 74 at the inner tie element end.

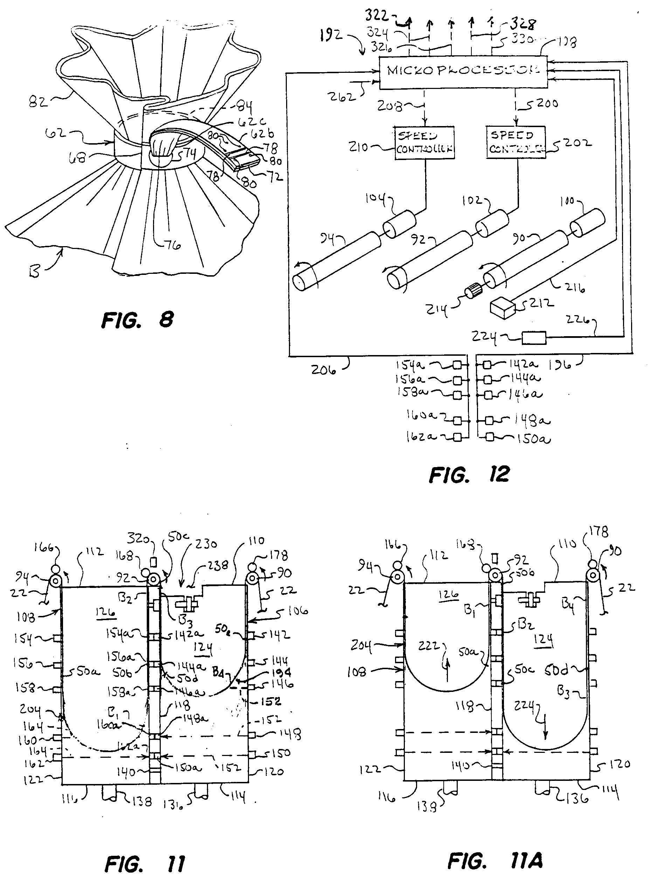

As illustrated in Fig. 8, the tie element 62 may then be used to tightly close and seal the open end 82 of its associated bag B by simply wrapping the tie element 62 around the open bag end, passing the outer tie element end portion 62_{b} through the slit 76 to form a loop 84 around the open bag end, and then firmly pulling on the tie element to cinch the loop around the bag. The length of the slit 76 is preferably made somewhat shorter than the width of the tie element 62 which tends to crumple and gather the tie element as indicated at 62_{c}, at its juncture with the slit, thereby substantially inhibiting loosening of the bag-closing tie element loop 84.

The illustrated closure tie element 62 is merely representative of a wide variety of tie element structures which could be attached to the individual bag portions of the laterally folded plastic film web 22.

Referring now to Figs. 1 and 9, the tie element attachment machine 60 includes a generally rectangular support frame structure 86 which is floor supportable on four vertically adjustable support feet 88 positioned at the corners of the support frame structure. The web handling portion 60ₐ of the machine 60 is carried by a front side portion of the frame structure 86 and includes three drive roller members - an inlet drive roller 90, a central drive roller 92, and an outlet drive roller 94. As illustrated, the rollers 90, 92 and 94 extend horizontally, are laterally spaced apart, and are in essentially the same horizontal plane.

The three drive rollers longitudinally extend in a front-to-rear direction relative to the support frame structure 86, and are pivotally supported at their opposite ends on support frame portions 96 and 98. Roller 92 is spaced leftwardly from roller 90, and roller 94 is spaced leftwardly from roller 92. As schematically depicted in Fig. 12, the roller 90 is driven in a counterclockwise direction by a motor 100, roller 92 is driven in a counterclockwise direction by a stepper motor 102, and roller 94 is driven in a counterclockwise direction by a motor 104.

Supported by a front side portion of the support frame structure 86 directly beneath the rollers 90, 92 and 94 are a side-by-side pair of metal vacuum bins 106 and 108 (cross-sectionally illustrated in Fig. 11), bin 108 being positioned immediately to the left of bin 106. The vacuum bins 106, 108 have generally rectangular configurations, open top ends 110 and 112, bottom walls 114 and 116, a common central side wall 118, outer right and left side walls 120 and 122, rear walls 124 and 126, and front side walls 128 and 130. As illustrated in Fig. 11, roller 90 is positioned above and tangent to the bin wall 120, the roller 92 is positioned above the top end of the central bin wall 118 and is tangent to its opposite sides, and the roller 94 is positioned above and tangent to the bin wall 122.

For purposes later described, a vacuum pump 132 (Fig. 9) is supported by the frame structure 86 generally behind the left vacuum bin 108 and has an inlet 134. The inner ends of a pair of flexible vacuum hoses 136 and 138 are connected to the inlet 134, and the outer ends of the hoses 136, 138 are respectively connected to the bottom vacuum bin walls 114, 116 and communicate with the interiors of the bins 106, 108. The interiors of the vacuum bins 106, 108 communicate with one another via a transfer passage 140 formed through a lower end portion of the common central bin wall 118 and functioning to generally equalize the vacuums drawn in the two bins.

Also for purposes later described, a vertically spaced series of five photoelectric beam transmitting units 142, 144, 146, 148 and 150 are mounted on the right bin side wall 120 and are adapted to leftwardly transmit photoelectric beams 152 across the interior of vacuum bin 106 for receipt by a vertically spaced series of beam receiving members 142ₐ-150ₐ mounted on the central bin wall 118. In a similar fashion, a vertically spaced series of photoelectric beam transmitters 154, 156, 158, 160 and 162 are mounted on the left bin side wall 122 and are operative to rightwardly transmit photoelectric beams 164 across the interior of the left vacuum bin 108 for receipt by a vertically spaced series of corresponding beam receiving units 154ₐ-162ₐ.

Referring now to Figs. 9 and 11, the web handling portion 60ₐ of the tie element attachment machine 60 also includes a pair of pinch rollers 166 and 168 which are rotationally carried at their outer ends by arm members 170, 172. The inner ends of the arm members 170, 172 are pivotally carried by a pair of upright support plate structures 174 and 176 which project upwardly from left end sections of the support frame portions 96, 98. As illustrated, the arm members 170, 172 are downwardly pivotable to respectively position the pinch rollers 166, 168 against upper portions of the outlet drive roller 94 and the central drive roller 92. A third pinch roller 178 is similarly carried on a pair of arms 180 pivotally secured at their inner ends to a pair of upright support bracket structures 182, 184 positioned along right end sections of the support frame portions 96, 98. The arms 180 are downwardly pivotable to position the pinch roller 180 against an upper portion of the inlet drive roller 90.

Referring now to Figs. 1 and 11, the laterally folded plastic film web 22 exiting the bag forming station apparatus 38 is extended through a conventional web guide apparatus 186, secured to a right end portion of the support frame structure 86, which functions to automatically maintain proper lateral alignment of the web during operation of the overall system. Upon leftwardly exiting the web guide apparatus 186, the web 22 sequentially passes beneath a guide roller 188, between the drive and pinch roller sets 90 and 180, 92 and 168, and 94 and 166, beneath a guide roller 190, beneath the stationary roller 53, and over the pivotally mounted dancer roller 54 and upwardly into the winder mechanism 52. Utilizing the subsequently described control system 192 (Fig. 12), start-up of the web handling portion 60ₐ of the machine 60 is effected as follows.

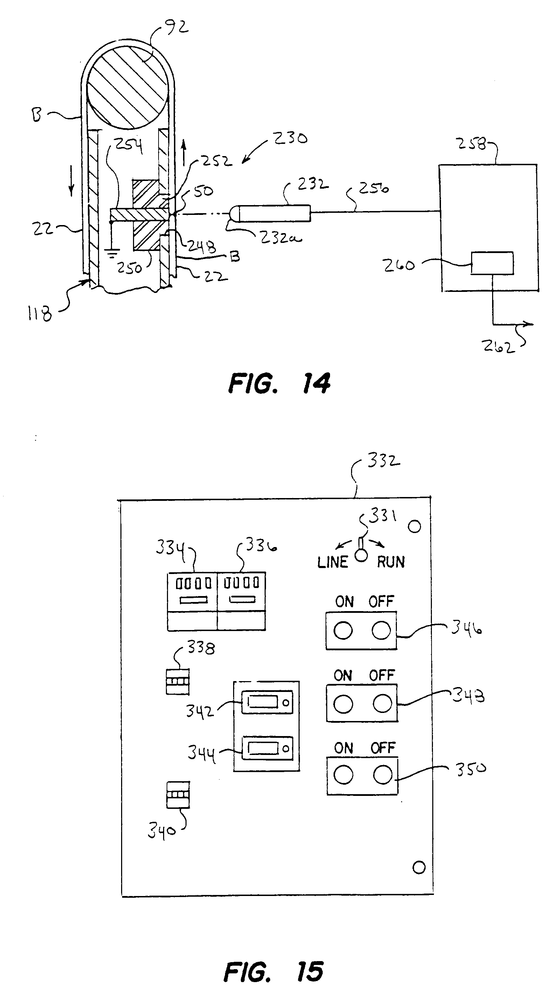

The web 22 is loaded into the tie element attachment machine 60 by initially passing the web under roller 188, resting the web atop the three drive rollers 90, 92 and 94, and passing the web beneath roller 190 and operatively connecting it to the winder 52. A switch 331 on a main control panel 332 (Fig. 15) is then moved to its "LINE" position which, via a microprocessor 198 (Fig. 12), initiates the operation of rollers 90 and 94 at rotational speeds corresponding to the linear web velocity V₁.

When it is desired to attach tie elements to the web 22, an operator moves the switch 331 from its "LINE" position to its "RUN" position. This signals the microprocessor 198 to energize the vacuum pump 132 (Fig. 9) and slow the rotation of roller 94 via an output signal 208 transmitted to its speed controller 210. The slowing of roller 94 causes the web 22 to be pulled downwardly into the vacuum bin 106. In a manner subsequently described, when web 22 downwardly reaches a predetermined level within bin 106, the microprocessor 198 transmits an output signal 200 to speed controller 202 (Fig. 12) to rotationally "step" the roller 92 at a rotational velocity greater than the linear velocity V₁, permitting the web 22 to be vacuum-drawn downwardly into bin 108 into a looped configuration 204 until, in a manner subsequently described, the corresponding web loop 194 in bin 106 is shortened and the loops 194 and 204 are in their relative length relationship illustrated in Fig. 11. In such length relationship the loop 204 is considerably longer than loop 194.

After this initial length relationship between the web loops 194, 204 is achieved, the microprocessor 198 signals speed controller 210 to operate roller 94 at a rotational speed equal to that of roller 90 to maintain the web loops in this initial length relationship. Upon attainment of this condition, the switch 331 is moved to its "RUN" position which, via the microprocessor 198, lowers the tie element portion 60_{b} of machine to be lowered into its operative position.

During the start-up, with the folded plastic film web 22 being outputted from the sealing, folding and perforating apparatus 38, the motor 100 rotationally drives the inlet roller 90 at a constant torque and at a counterclockwise, variable rotational speed corresponding to the linear web output speed V₁ so that the web takeup speed of the roller 90 is equal to the linear web output speed from the apparatus 38. The above-described slowing of roller 94 forms a slack portion of the web 22 between the rotating drive roller 90 and the stationary central drive roller 92. The operation of the vacuum pump 132 (Fig. 9) creates a yielding vacuum force within the vacuum bin 106 which draws this slack web portion downwardly into bin 106 and gently holds it in the illustrated, downwardly looped configuration 194 (Fig. 11). As the roller 90 continues to rotate, the vertical length of the web loop 194 downwardly increases.

The increasing length. of the web loop 194 is continuously monitored by the photoelectric beam receivers 142ₐ-150ₐ supported on the central bin wall 118. It can be seen in Fig. 11 that as the web loop 194 extends further downwardly within the bin 106 it sequentially blocks downwardly successive ones of the photoelectric beams 152. When the lower end of the loop web 194 downwardly reaches a predetermined vertical level within the bin 106, a combinative signal 196 (Fig. 12) is transmitted from the receivers 142ₐ-150ₐ to a microprocessor 198, the signal 196 indicating that the vertical length of the web loop 194 has reached its desired magnitude.

Upon receiving the signal 196, indicating that the web loop 194 has reached its desired initial length within the bin 106, the microprocessor 198 responsively transmits an output signal 200 to the speed controller 202 which in turn, operates the motor 102 to step the central drive roller 92 at a faster speed than the inlet roller 90, thereby initiating the formation of web loop 204. The stepped rotation of the central drive roller 92 increases the length of the resulting slack web portion between the rollers 92, 94, the vacuum force within the left bin 108 exerting a yielding downward force on this second slack web portion to convert it to the second downwardly extending web loop 204. When the bottom end of the web loop 204 is properly positioned within bin 108 (see Fig. 11), the photoelectric receivers transmit through the microprocessor 198 a combinative signal 206 indicative of the fact that the left web loop 204 has now reached its desired initial vertical length.

Microprocessor 198 then responsively transmits an output signal 208 to a speed controller 210 which operates the motor 104 to initiate a change in rotation of the outlet drive roller. The roller 94 is driven at a rotational speed identical to that of the inlet drive roller 90 via the operation of a magnetic speed sensor 212 that monitors the rotational speed of a small gear member 214 secured to the front end of the inlet drive roller 90 for rotational therewith. Speed sensor 212 responsively transmits to the microprocessor 198 a rotational speed-indicative output signal 216 which, in a feedback manner, is operative to adjust the output signal 208 to the speed controller 210, to thereby equalize the rotational speeds of the inlet and outlet drive rollers 90, 94. With the three drive rollers 90, 92 and 94 being operated at essentially constant speeds, the heights of the web loops 194 and 204 are maintained in their length relationship illustrated in Fig. 11 during the start-up phase of machine operation.

The microprocessor 198, and the speed controllers 202 and 210, are conveniently positioned within a rear side portion of the support frame structure 86 (Fig. 9) along with various other control components generally indicated by the reference numeral 218. After the previously described start-up procedure has been accomplished, the web handling position 60ₐ of the machine 60 is converted to its normal operating mode by moving switch 331 to its "RUN" position. In this operating mode, the inlet and outlet drive rollers 90, 94 are still rotated at constant and essentially identical speeds, but the central drive roller is sequentially started and stopped to sequentially and stationarily position longitudinal sections of each individual bag B, adjacent its perforation line 50 that defines its openable end, to ready such longitudlnal bag sections for the attachment thereto of the tie elements 62 in a manner subsequently described.

Quite importantly, this sequential stoppage of each individual bag B at the central drive roller 92 is accomplished without appreciably altering the constant output and intake velocities V₁ and V₂ of the longitudinally moving folded plastic film web 22 as it approaches and exits the tie element attachment machine 60. Additionally, as will be seen, due to the unique formation of the web loops 194 and 204 such individual bag stoppage is effected without imposing upon the web 22 undesirable longitudinal tension forces which might otherwise tear the web at one of its perforation lines 50. The unique achievement of these two very desirable results will now be described in conjunction with Figs. 11 and 11A.

In Fig. 11A, the central drive roller 92 has been stopped, during the continuing rotation of the inlet and outlet drive rollers 90 and 94, to thereby momentarily hold the bag portion B₁ thereon with the openable end perforation line 50_{b} of the bag B₁ being rightwardly adjacent the central drive roller 92, and the opposite end perforation line 50ₐ of the bag B₁ being positioned upon the web loop 204 being vacuum-drawn downwardly into the bin 108 through its open upper end 112. The longitudinal section of the stopped bag B₁ positioned atop the now stationary central drive roller 92 corresponds to the longitudinal section of such bag to which its closure tie element 62 will be affixed.

During its momentary stoppage, the central drive roller 92 does not, of course, continue to drive a left side portion of the right web loop 194 into the left vacuum bin 108. However, the continued rotation of the inlet and outlet drive rollers 90, 94 continues to feed the web 22 into the right vacuum bin 106, and withdraw the web 22 from the left vacuum bin 108. This functions to lengthen the web loop 194, while shortening the web loop 204, as respectively indicated by the arrows 220 and 222 in Fig. 11A. The left web loop 204 is shortened against the downwardly directed vacuum force imposed thereon by the vacuum pump 132. Accordingly, the tension force exerted on the web loop 204 by the continuously rotating outlet drive roller 94 is insufficient to tear any of the web perforation lines disposed within the left vacuum bin 108 - all the outlet drive roller 94 does during this period in which the central drive roller 92 is momentarily stopped, is take up the slack in the left web loop 204.

After its tie element 62 is secured to the momentarily stopped bag B₁, as monitored by an appropriate sensor 224 (Fig. 12), the sensor 224 transmits an output signal 226 to the microprocessor 198 indicating that the tie element has been attached. The roller 92 is not commanded to rotate until photocell 150 is covered by web loop 194, at which time the output signal 196 is transmitted to microprocessor 198. When the signal 196 is received by the microprocessor, the microprocessor automatically adjusts its output signal 200 to the speed controller 202 to operate the stepper motor 102 in a manner such that the central drive roller 92 is sequentially started and rotationally accelerated to a counterclockwise rotational speed higher than the speeds of the inlet and outlet drive rollers 90 and 94, maintained at this elevated speed for a predetermined time period, decelerated, and stopped.

The result of this speed control cycle of the central drive roller 92 is that at the moment of its stoppage subsequent to the attachment of the tie element to the bag B₁, the right web loop 194 has been re-lengthened, and the left web loop 204 reshortened, to their original lengths as depicted in Fig. 11. Additionally, the next bag B₂ has been stopped at the central drive roller 92, with the openable end perforation line 50_{c} of bag B₂ positioned rightwardly adjacent the roller 92, and the opposite perforation line 50_{b} being now positioned within the left vacuum bin 108.

After this stoppage of the central drive roller 92, which readies the bag B₂ for the attachment of its tie element thereto, the web loops 194, 204 again begin to respectively lengthen and shorten as illustrated in Fig. 11A. The elevated speed level of the central drive roller 92, which shortens the web loop 194, does not impose undesirably high longitudinal tension force on the loop 194, since the roller 92 merely takes the slack out of the previously lengthened loop 194 against the yielding, downwardly directed vacuum force on such loop within the right vacuum bin 106.

It can thus be seen that the web handling apparatus of the present invention, by means of the formation and length control of the two web loops 194 and 204, permits the sequential stoppage of each individual bag without overstressing the web 22 or appreciably altering the linear output and intake speeds V₁ and V₂ of the web.

It will be appreciated that the microprocessor 198 may be easily programmed to operate the speed controller 202 such that, during each period in which the drive roller 92 is rotated, the stepper motor 102 inputs the proper number of rotational "steps" to the central drive roller 92. The roller 92 sequentially advances the web a distance equal to the length of the individual bags being produced, and that the time period between stoppages of the roller 92 is coordinated to essentially equalize the lengths of the web loops 194, 204 each time the central drive roller is stopped.

In addition to precisely controlling each web advancement length of the roller 92, it is also important to insure that as each individual bag is stopped at the central drive roller, the openable end perforation line of such bag is properly positioned relative to the stopped roller so that each attached tie element is properly positioned on its associated bag. In the present invention, this is achieved by the use of a specially designed perforation detection system 230 which is illustrated in Figs. 11, 11A, 13 and 14.

The perforation detection system 230 includes a high voltage electrode member encased in an insulation tube 232 which is mounted on the outer end 234 of an L-shaped support arm 236 which extends rearwardly through an opening 238 formed in the rear side wall 124 of the right vacuum bin 106 adjacent its upper end and the upper end of the central bin wall 118. The inner end 240 of the support arm 236 is positioned behind the bin wall 124 and is secured to a pivot pin member 242 which permits the support arm 236 to pivot about a horizontal axis, as indicated by the double-ended arrow 244 in Fig. 13, between an operating position shown in Fig. 13 and a stowage position in which the electrode 232 and the outer end 234 of the support arm 236 are rearwardly pivoted through the bin wall opening 238 and are withdrawn from the vacuum bin 106.

With the support arm 236 forwardly pivoted to its operating position, the portion of the support arm extending forwardly through the bin wall opening 238 rests upon and is supported by a horizontally extending tab portion 246 of the rear side bin wall 124, and the left or discharge end 232ₐ of the electrode 232 is positioned slightly rightwardly of the central bin wall 118.

Directly to the left of the inner electrode end 232ₐ is a circular opening 248 formed in the central bin wall 118. As cross-sectionally illustrated in Fig. 14, a cylindrical insulator member 250 has a boss portion 252 positioned within the bin wall opening 248, and a grounded cylindrical metal conductor member 254 extends coaxially through the insulator member 250, the exposed right end of the conductor member 254 facing the inner end 232ₐ of the electrode 232.

As illustrated in Figs. 11 and 14, a left side portion of the right web loop 194 is routed upwardly between the electrode 232 and the insulator 250 onto the central drive roller 92. Accordingly, during operation of the tie element attachment machine 60 the web perforation lines 50 are sequentially passed between the electrode 232 and the conductor 254. The electrode 232 is connected via a lead 256 to a high voltage power supply device 258 which functions to create a high voltage potential across the gap between the electrode 232 and the conductor 254. Electrical discharge between the electrode 232 and the conductor 254 is normally prevented by the high dielectric constant of the plastic film material of the web 22 positioned in such gap.

However, each time a perforation line passes through this gap, an electrical discharge occurs from the electrode 232, through the perforation line, to the conductor 254, and then through the conductor to ground. This creates a current flow from the electrode to ground, which is sensed by a current sensor 260 that responsively transmits a current-indicative output signal 262 to the microprocessor 198 (see Fig. 12). In this manner, a precise monitoring of the position of the openable end perforation line of each of the individual bags is achieved so that when each individual bag is stopped at the central drive roller 92, the longitudinal section of each individual bag to which its tie element is to be attached is also precisely positioned.

Should the control system 192 detect a deviation in the desired position of the openable end perforation line 50 when a particular bag is stopped at the central drive roller (such deviation being caused for example, by roller slippage) the microprocessor 198 automatically functions to adjust the signal 200 being transmitted to the speed controller 202 to momentarily increase or decrease the counterclockwise rotational steps of the roller 92 to readjust the stopped bag position on the central drive roller 92, and correspondingly adjust the signal 200 to increase or decrease the total number of rotational "steps" imparted to the central drive roller 92 during one start-stop rotational cycle thereof, thereby properly readjusting the longitudinal orientation of each individual bag as it is stopped at the central drive roller 92.

Normally, the rotational speeds of the inlet and outlet drive rollers 90, 94 are the same. However, at certain web velocities and bag lengths, the web loop 204 in the vacuum bin 108 may become too long or too short during the tie element attachment process. When the web 204 is too long (such as, for example the photocells 160 or 162 are covered by the loop 204), the microprocessor is signalled and responsively causes the controller 210 to temporarily increase the rotational speed of roller 94. In a similar fashion, when web loop 204 becomes too short (such as, for example, when photocells 156 and 158 are uncovered), an appropriate signal is sent to the microprocessor which, in turn, temporarily slows the rotational speed of roller 94.

The pivotal mounting of the electrode 232 on the L-shaped support arm 236 functions to prevent the web 22 from being torn at one of its perforation lines 50 in the event that the right web loop 194 is shortened to an extent that its lower end contacts the outer end 234 of the support arm 236. In the event that this occurs, the web merely pivots the support arm 236 rearwardly to its stowed position in which it is disposed entirely behind the bin wall 124 by movement through the bin wall opening 238 as previously described.

The control system 192 described in conjunction with Fig. 12 is, of course, adjustable to compensate for different bag lengths being driven through the web handling portion 60ₐ of the tie element attachment machine 60, the bag length being the distance between sequentially adjacent pair of perforation lines 50. The web handling portion 60ₐ may also be easily adjusted to compensate for folded webs of different widths. This width adjustment is achieved in the present invention by providing means for selectively varying the effective front-to-rear widths of the vacuum bins 106 and 108. Such bin width adjustment is obtained by mounting the front bin walls 128, 130 for selective front and rear movement relative, to the balance of the bins.

Referring now to Fig. 9, upper and lower support members 264 and 266 are suitably secured between the central bin wall 118 and the outer side walls 120, 122 of the vacuum bins. Internally threaded nut members 268, 270 are captively retained on the upper and lower support members 264, 266 for rotation relative thereto and threadingly receive elongated externally threaded rod members 272, 274 welded at their inner ends to the movable front bin walls 128, 130. Along their opposite vertical sides, the front bin walls 128, 130 are provided with resilient seal members 276 which slidingly engage the opposite left and right side walls of each bin.

Sprocket members 278, 280 are respectively secured to the upper and lower nut members 268 and 270, and are drivingly interconnected by suitable chains 282. The upper nut members 268 have secured thereto suitable adjustment knobs 284 which may be rotated to effect forward or rearward movement of their associated front bin walls. For example, as viewed in Fig. 9, clockwise rotation of one of the adjustment knobs 284 effects forward movement of its associated front bin wall, while counterclockwise rotation of the adjustment knob causes rearward movement of the front bin wall. In this manner, front-to-rear width adjustment of the two vacuum bins may be obtained so that the front-to-rear width of the bins is just slightly larger than the width of the folded plastic film web being used in a particular bag run. This width adjustment capability assures that the downward vacuum force applied to the web loops in each of the bins is efficiently applied to such loops.

The web handling apparatus 60ₐ just described is particularly well suited to its illustrated use in handling the folded plastic film web 22 used in the in-line production of plastic bags in which it is necessary to momentarily stop longitudinally spaced apart sections of the continuously moving web to secure flexible tie elements to the stopped web sections. However, it will be readily appreciated that the unique structure and operation of the web handling apparatus would also be quite useful for the performance of operations other than tie element attachment - for example, in printing, attachment of auxiliary components of other types, and the like.

Turning now to Figs. 9 and 10, the tie element attachment portion 60_{b} of the machine 60 will be described in detail. The support spindle 66 of the tie element supply roll 64 is rotationally supported on the upper ends of a pair of upright support bars 286 extending upwardly from the support brackets 182, 184 positioned at a right front corner portion of the support frame structure 86 as previously described. Extending leftwardly from the support brackets 182, 184 are a spaced pair of support arm structures 288. The support arm structures 288 are secured to the brackets 182, 184 and are pivotally carried by a support rod structure 290 so that the tie element roll 64, the support bars 286, and the support arm structures 288 may be pivoted between the solid line, lowered operating position of the tie element attachment portion 60_{b} and its dotted line raised access position schematically depicted in Fig. 1.

As best seen in Fig. 10, the tie element web 68 extends downwardly from the supply roll 64 and is passed under a dancer roller 291 which is pivotally carried on support arms 292 secured at their inner ends to the brackets 182 and 184. The web 68 then passes upwardly around an upper guide roller 292, beneath a lower guide roller 294, and across a support plate member 296 extending between and supported by the support arm structures 288. As it leftwardly exits the support plate member 296, the web 68 passes over a guide roller 298 and wraps around a drive roller 300 which advances the web 68 a predetermined length into a vertically opposed pair of drive rollers 302, 304 that operate to pull each sheared-off tie element 62 from a shearing knife 310.

As the web 68 is drawn leftwardly along the upper side surface of the support plate member 296, a vertically reciprocating heating die 306, carried by the left support arm structure 288 and positioned above the support plate member 296, forms the weld lines 78 (Fig. 7) on longitudinally spaced apart sections of the leftwardly moving tie element web. As the web, with the weld lines 78 thereon, leftwardly exits the guide roller 300, it passes between the base and reciprocating knife portions 308 and 310 of a vertically reciprocating slitting knife mechanism 312. Operation of the vertically reciprocating knife 310 transversely separates the individual tie elements 62 from the leftwardly moving web 68. As each individual tie element 62 exits the slitting mechanism 312 it is drivingly engaged by the drive rollers 302, 304 and moved leftwardly between a pinch roller 314 and the bottom side of a rotationally driven vacuum belt 316 positioned over the central drive roller 92.

As illustrated in Fig. 10, clockwise rotation of the vacuum belt leftwardly transports the individual tie elements 62, and positions the leftmost tie element directly above the central drive roller 92 and the longitudinal section of the folded plastic film web 22 momentarily stopped thereon. With the leftmost tie element 62 stopped in this position, its inner end portion 62ₐ extends forwardly beyond the font side edge of the vacuum belt and is positioned over the overhanging side edge portion 42ₐ of the folded web 22 (Fig. 4), and its outer end portion 62_{b} (which extends outwardly beyond the rear side edge of the vacuum belt) is positioned as illustrated in Fig. 5.

To attach the leftmost tie element 62 to the particular individual bag stopped at the central drive roller 92, a pair of reciprocating heating dies 318 and 320 are mounted at the left ends of the support arm structures 288 and are respectively positioned over the outer and inner end portions of the leftmost tie element depicted in Fig. 10 which laterally extend beyond the opposite side edges of the vacuum belt. The heating die 318 is utilized to form the small circular dimples 80 (Fig. 7) on the outer end of the leftmost tie element 62, and the heating die 320 is used to form the circular weld line 74, and the slit 76, on the inner end portion of the tie element.

It will be appreciated that the rate of advancement of the individual tie elements formed from the leftwardly advancing web 68 in the tie element attachment portion 60_{b} of the machine 60 is appropriately and intermittently sequenced relative to the sequence and speed of folded web advancement at the central drive roller 92. This sequencing is conveniently achieved using the microprocessor portion 198 of the control system 192 schematically depicted in Fig. 12. The microprocessor, in response to the tie element attachment output signal 226, transmits output signals 322, 324, 326, 328 and 330. Output signal 322 is indicative of the stoppage of the stepper motor 102, output signal 324 is indicative of the reciprocating dies 318, 320 being in their downward position, output signal 326 is indicative of such dies being in their upward position, output signal 328 operates the slitter 312, and output signal 330 advances the tie element web 68 through its next increment. These signals, of course, are appropriately interrelated to position signals associated with the web handling portion of the tie element attachment machine.

As previously mentioned, and as schematically illustrated in Fig. 1, the tie element attachment portion 60_{b} of the machine 60 is pivotable between a lowered, solid line operating position and a raised, dotted line access position. According to a feature of the present invention, appropriate control means 331 (Fig. 1) are provided to monitor the cooperative operation of the machine portions 60ₐ and 60_{b} when the tie element attachment portion 60_{b} is in its lowered position and the bag web 22 is being leftwardly conveyed as previously described. In the event of a machine malfunction, such as a jamming of the machine portion 60_{b}, or a deviation in one or both of the bag web loop lengths from its maximum or minimum permissible length, the schematically depicted control means 331 are operative to upwardly pivot the machine portion 60_{b} (by operating suitable drive means not illustrated) to its access position while the bag web 22 continues to be produced and run through the machine 60.

To effect this automatic upward pivoting of the machine portion 60_{b}, appropriate condition signals 331ₐ, 331_{b} are transmitted to control means 331 from the microprocessor 198, the signal 331ₐ being indicative of sensed operating condition of the machine portion 60ₐ, and the signal 331_{b} being indicative of a sensed operating condition of the machine portion 60_{b}. If either signal 331ₐ or 331_{b} is indicative of a malfunction of its associated machine portion the control means 331 output a signal 331_{c} to energize the aforementioned drive means which, in turn, upwardly pivot the machine portion 60_{b}. The control means 331 may, at this time, also transmit an output signal 331_{d} used to energize an audible alarm (not illustrated).

The overall operation of the machine 60 is adjusted and controlled by the main control panel 332 (Fig. 15) which, as seen in Fig. 9, is positioned on the right end of the support frame structure 86. The panel 332 includes heating temperature controls 334, 336 for the tie element weld lines 74 and 78, and the dimples 80, and a heat seal time control 338 for these areas. A length adjustment dial structure 340 is provided for inputting to the machine the length of the individual bags being driven therethrough. To monitor the number of bags which have passed through the machine 60, appropriate cumulative counters 342, 344 are also provided. Finally, appropriate on-off switch controls 346, 348, 350 are respectively provided to control the power, tie element attachment, and transport functions of the tie element attachment machine.

## Claims

1. A web handling apparatus (60a) for use in conjunction with a high-speed plastic film manufacturing apparatus including a forming station (38) adapted to continuously output, at an essentially constant first linear travel speed (V1), a plastic film web (22) having formed thereon a longitudinally adjacent series of interconnected individual differentiated plastic film web portion sections (B), and a web receiving mechanism (52) spaced apart from the forming station (38) and adapted to forcibly capture the outputted plastic film web (22) at an essentially constant second linear travel speed (V2) substantially equal to the first linear travel speed (V1), and additional web handling apparatus (60a) interposeable between the forming station (38) and the web receiving mechanism (52) for engaging the moving plastic film web (22) and momentarily stopping, in sequence, a predetermined longitudinal section of each said differentiated individual plastic film web portion section (B), so that a selected operation may be performed on each momentarily stopped individual differentiated longitudinal web portion section (B),
characterized in that
the web handling apparatus (60a) being operable to momentarily stop said longitudinal differentiated web portion sections (B) without appreciably altering the essentially constant first and second linear travel speeds (V1,V2) or imposing undesirably high longitudinal tension forces on the plastic film web (22), said web handling apparatus (60a) comprising:
a support structure (86);
roller means, carried by said support structure, for drivingly engaging the plastic film web (22) outputted from the forming station (38) and moving it generally toward the web receiving mechanism (52), said roller means including:
an inlet drive roller (90),
an outlet drive roller (94) spaced laterally apart from said inlet drive roller (90), toward the web receiving mechanism (52), in a generally parallel relationship with said inlet drive roller (90), and
a central drive roller (92) positioned between said inlet and outlet drive rollers (90,94) in a laterally spaced, generally parallel relationship therewith;
drive means (100,102,104) for rotationally driving said inlet, outlet and central drive rollers (90,94,92) in a manner such that first and second slack portions (194,204) of the plastic film web (22) are respectively formed between said inlet drive roller (90) and said central drive roller (92), and between said central drive roller (92) and said outlet drive roller (94);
vacuum means (106,108,132) for exerting a yielding vacuum force on said first and said second slack portions to respectively form therefrom first and second plastic film web loops (194,204), each having a length and extending generally transversely to said inlet, outlet and central drive rollers (90,94,92);
control means (192) for regulating said drive means in a manner such that:
said inlet and outlet drive rollers (90,94) are continuously driven at rotational speeds corresponding to said first linear travel speed (V1); and
said central drive roller (92) is alternately stopped to engage and stationarily position a selected portion of one of said differentiated web portion sections (B) thereon, thereby causing the length of said first plastic film web loop (194) to increase and the length of said second plastic film web loop (204) to decrease, and then being started and driven at a rotational speed higher than that of said inlet and outlet drive rollers (90,94) until a corresponding selected portion of an adjacent one of said differentiated web portion sections (B) is engaged by said central drive roller (92), and said first and second film web loops (194,204) are respectively shortened and lengthened essentially to the lengths thereof which existed prior to the stoppage of said central drive roller (92).

2. The web handling apparatus of Claim 1 wherein said vacuum means is further characterized as:
first and second vacuum bins (106,108) having open ends (110,112) facing said inlet, outlet and central drive rollers, said first and second plastic film web loops (194,204) extending through said open ends into the interiors of said first and second vacuum bins, respectively, and vacuum pump means (132), having an inlet portion (136,138) communicating with the interiors of said vacuum bins, for exerting said yielding vacuum force on said first and second slack portions from which said first and second plastic film web loops (194,204) are formed.

3. The web handling apparatus of Claim 1 or 2 further characterized in that the lengths of said first and second plastic film web loops (194,204) within said first and second vacuum bins (106,108) are continuously monitored by position sensing devices.

4. The web handling apparatus of Claim 3 characterized in that said position sensing devices comprise:
spaced series of photoelectric sensing receivers (142a-162a), extending along said first and second vacuum bins (106,108) in directions generally parallel to the lengths of said first and second plastic film web loops (194,206) within said first and second vacuum bins.

5. The web handling apparatus of Claim 4 characterized in that:
said first and second vacuum bins (106,108) are positioned in a side-by-side relationship divided by a common central wall structure (118) extending generally parallel to the lengths of said first and second plastic film web loops (194,204), and have outer side walls (120,112) which face and are generally parallel to said common central wall structure, and
said spaced series of photoelectric sensing receivers (142a-162a) include spaced series of photoelectric beam transmitting units (142-162) positioned on said outer side walls, and associated series of photoelectric beam receiving units (142a-150a; 154a-162a) positioned on said common central wall structure.

6. The web handling apparatus of any of claims 1-5 characterized that said control means (192) further include:
means (262; 148,150; 160,162), responsive to a sensed excessive shortening or lengthening of one of said first and second plastic film web loops (194,204), for momentarily adjusting the rotational operation of at least one of said central and outlet drive rollers (92,94) to compensate for said excessive shortening or lengthening.

7. The web handling apparatus of any of claims 1-6 further characterized as including:
means (284) for adjusting the widths of said first and second vacuum bins (106,108), in directions parallel to the edge-to-edge width of said plastic film web, to compensate for variations in the edge-to-edge width of the particular plastic film web (22) being moved through said web handling apparatus.

8. The web handling apparatus of Claim 7 characterized in that
each of said first and second vacuum bins (106,108) has a side wall (128,130) inwardly and outwardly movable relative to the balance of the vacuum bins, and
said means (284) for adjusting include inwardly and outwardly adjusting movable side walls (128,130).

9. The web handling apparatus of any of claims 1-8 characterized as including means for sensing (230) the stopped longitudinal orientation of each said differentiated individual plastic film web portions (B) relative to said central drive roller (92).

10. The web handling apparatus of any of claims 1-8 characterized in that said forming station (38) is a bag forming station which defines on the moving plastic film web (22) a longitudinally adjacent series of interconnected individual plastic film bags (B) which comprise said differentiated web portion sections.

11. The web handling apparatus of Claim 10 characterized in that each said individual plastic film bag (B) is joined to its longitudinally adjacent individual plastic film bag portions along a pair of longitudinally spaced perforation lines (50) formed laterally across said plastic film web, and
said means for sensing (230) include perforation line sensing means (232,254) for sensing the position of one of the perforation lines associated with each of said individual bag portions.

12. The web handling apparatus of Claim 11 characterized in that said perforation line sensing means include:
means (254) for passing an electrical discharge through said one of the perforation lines (50) of each of said individual bag portions (B) as it approaches said central drive roller.

13. The web handling apparatus of Claim 12 characterized in that said means for passing an electrical discharge through said one of the perforation lines include:
an electrically charged electrode member (232) positioned on one side of a portion of said first plastic film web loop (194), and
an electrical conductor member (254) positioned on the opposite side of said portion of said first plastic film web loop and facing said electrode member.

14. The web handling apparatus of any of claims 1-13 characterized in that said control means further include:
means (198,202,210), responsive to a sensed longitudinal misalignment between the individual stopped bag portions (B) and said central drive roller (92), for temporarily adjusting the rotational operation of at least one of said central (92) and outlet (94) drive rollers to effect a longitudinal realignment between the stopped individual bag portions and said central drive roller.

15. The web handling apparatus of Claim 13 or 14 further characterized by:
current sensing means (260) for sensing an electrical discharge from said electrode member (232) through said one of said perforation lines (50) to said conductor member (254) and responsively transmitting a current-indicative output signal (262), and
wherein said control means (198,202,210) are operative, when the timing of said output signal relative to the rotational position of said central drive roller is indicative of a longitudinal misalignment between the individual stopped bag portions and said central drive roller (92), to temporarily adjust the rotational operation of at least one of said central (92) and outlet (94) drive rollers to effect a longitudinal realignment between the stopped individual bag portions and said central drive roller.

16. The web handling apparatus of any of claims 13-15 characterized in that
said electrode member (232) is pivotally mounted within said first vacuum bin (106) and is engageable by said first plastic film loop (194), upon an excessive shortening thereof, to pivot said electrode member out of said first vacuum bin.

17. The web handling apparatus of claim 10 characterized in that the plastic film web (22) is a tube (32) continuously supplied to the bag forming station (38) flattened to a web configuration and said bag forming station (38) applies a heated member to the flattened web to make a longitudinally spaced series of heat weld lines (40) to define the closed ends of said series of longitudinally adjacent interconnected plastic film bags (B) having their open ends defined by a longitudinally spaced series of perforations (50) formed adjacent said heat weld lines by said bag forming station.

18. The web handling apparatus of any one of claims 1-17 further characterized in that a tie element attachment machine portion (60) is positioned adjacent said inlet (90), outlet (94) and central (92) drive rollers, said machine having a mechanism (316) which positions a flexible tie element member (62) adjacent the openable end (50) of each individual bag (B) sequentially stopped at said central drive roller, and
means (320) for firmly securing an end portion of a tie element member (62) to a side edge portion (42a) of each successive adjacent plastic film bag (B).

19. The web handling apparatus of claim 18 characterized in that said tie element attachment machine (60) includes a roll of plastic film tie element web material (64), means (300) for controllably pulling said tie element material from said roll, means (308,310) for laterally cutting the tie element web material (68) pulled from said roll to form therefrom a series of plastic film tie elements (62), and means (316) for advancing the tie elements toward said central drive roller, and
said means for firmly securing include a heating die member (320) operative to heat weld said end portion of each tie element (62) to said side edge portion of its associated bag.

20. The web handling apparatus of claim 19 characterized in that said heating die member (320) is operative to form a circular heating weld area (74) between said end portion (62a) of each tie element (62) and said side edge portion of its associated bag.

21. The web handling apparatus of any of claims 18-20 characterized in that said tie element attachment portion further comprises:
means (320) for forming an opening (76) through each of said tie element end portions (62a), and through its associated bag side edge portion (42a), through which the opposite end (62b) of the tie element may be passed.

22. The web handling apparatus of Claim 21 characterized in that:
said opening (76) is an essentially straight slit having a length less than the width of its associated tie element.

23. The web handling apparatus of any of claims 18-22 characterized in that said tie element attachment machine portion (60) further comprises:
means (318) for releasably restraining the opposite end (62b) of each tie element to its associated bag so that the secured tie element longitudinally extends across an outer side surface of the plastic film web.

24. A method of establishing slack web loops (194,204) during longitudinal movement of a continuously moving elongated flexible material web (22), for the purpose of performing an operation on a temporarily stopped portion of the web at an accessory station (60) located intermediate an input (38) and an output section (52) of a web handling line (60a), said slack web loops being adjacent longitudinal sections of the moving web in transversely looped operating configurations, said method
characterized by the steps of:
passing the moving web (22) over side surfaces of first (90), second (92) and third rollers (94) mutually spaced apart from one another along an initial web drive path with said second roller (92) being positioned intermediate said first (90) and third rollers (94);
rotating of said first (90), second (92) and third rollers (94) to longitudinally drive the web (22) along said initial web drive path; and
re-orienting adjacent longitudinal sections of the moving web to said looped operating configurations thereof by:
temporarily altering the rotational speed of at least one of said first (90), second (92) and third (94) rollers to create a first slack web portion (194) between said first (90) and second rollers (92), and a second slack web portion (204) between said second (92) and third rollers (94),
exerting yielding forces on said first and second slack web portions to hold the same in looped configurations extending generally transversely to said initial web drive path.

25. The method of Claim 24 further characterized in that:
said step of temporarily altering the rotational speed of at least one of said first, second and third rollers (90,92,94) is performed by slowing the rotational speed of said third roller (94) to initiate the formation of said first slack web portion (194), and then increasing the rotational speed of said second roller (92) to shorten said first slack web portion (194) and initiate the formation of said second slack web portion (204).

26. The method of Claim 24 or 25 characterized in that:
said step of increasing the rotational speed of said second roller (92) is performed by rotationally stepping said second roller.

27. The method of one of Claims 24-26 characterized in that:
said step of exerting yielding forces on said first and second slack web portions (194, 204) is performed by creating differential pressure forces across said first and second slack web portions.

28. The method of Claim 27 characterized in that:
said step of creating differential pressure forces is performed by imposing a vacuum force on one side of each of said first and second slack web portions (194,204).

29. The method of any of claims 24-28 characterized in that:
during movement of the web (22) by said rollers the web is being delivered to said first roller (90) from a bag-forming station (20) at a linear output velocity (V1), and said method further includes the step of varying the rotational velocity of said first roller to compensate for variations in said linear output velocity.

30. The method of any of claims 24-29 characterized in that:
the slack web portions (194,204), during movement of the web by said rollers, have an initial relative length relationship, and said method further comprises the steps of intermittently stopping said second roller (92), to stop a web portion thereon and lengthen one of the slack web portions while shortening the other one, and then rotationally accelerating said second roller to return the slack web portions to said initial relative length relationship thereof.

31. The method of any of claims 24-30 further characterized by the steps of:
sensing a vertical length deviation of one of the slack web portions (194, 204) from a desired vertical length thereof, and temporarily altering the rotational velocity of one of said rollers to return said one of the slack web portions to said desired vertical length thereof.

32. The method of one of claims 24-31 wherein the continuous moving elongated flexible material web is a flattened tubular web (22) passing through a bag forming station (20) prior to the step of passing the moving web over the said first, second and third rollers, where the closed bottoms of successive adjacent bags (B) are defined by a longitudinally spaced series of heat welds (40) extending across the web (22) and having adjacent perforations (50) defining the top of the next of the series of bags (B), the method further characterized by:
providing a tie element machine (60) having a longitudinally unwinding web (64) of plastic film tie element web (68);
longitudinally unwinding a portion of said tie element web (68) along a controlled path;
sequentially severing successive longitudinal segments from the moving tie element (68) to form a series of elongated flexible bag tie elements (62);
transversely conveying each of the tie elements (62) to a position in which it longitudinally extends transversely across an exterior side surface portion (42a) of the bag web (22) with an inner end portion (62a) of the tie element overlying said side edge portion of the bag web; and
heat sealing the inner end (62a) of the tie elements to said side edge portion of the bag web at longitudinally spaced locations thereon.

33. The method of Claim 32 characterized by the step of:
releasably securing the outer ends (62b) of the tie elements (62) to said exterior side surface portion of the bag web.

34. The method of Claim 32 or 33 characterized by:
said step of transversely conveying is performed by transferring each tie element to a rotating vacuum belt (316), with the outer end portion (62a) of the tie element projecting laterally outwardly of the vacuum belt, which is operative to move the tie element to said position thereof.

35. The method of any of claim 32-34 further characterized by the step of:
temporarily stopping successive, longitudinally spaced sections (B) of the bag web during the performance of said heat sealing step.

36. The method of any of claims 32-35 characterized wherein:
said heat sealing step is performed by forming a heat seal line extending along at least a portion of a non-linear closed path.

37. The method of any of claims 32-36 further comprising the step of: forming a slit (76) through each tie element inner end portion (62a).

38. The method of claim 37 characterized in that said heat sealing step is performed by forming a generally circular heat weld line (74), and
said step of forming a slit (76) is performed in a manner positioning the slit within said generally circular heat weld line.

39. The method of any of claims 33-38 further characterized by the step of:
heat sealing an edge portion of the tie element (62) to weldingly reinforce what will be the outer ends (62b) of the tie elements.

## Patentansprüche

1. Bahnhandhabungsvorrichtung (60a) zur Verwendung in Verbindung mit einer mit hoher Geschwindigkeit arbeitenden Kunststoffolien-Herstellungsvorrichtung mit einer Formgebungsstation (38), die zum kontinuierlichen Abgeben einer Kunststoffolienbahn (22), auf der eine in Längsrichtung aneinander angrenzende Reihe miteinander verbundener, einzelner unterschiedlicher Kunststoffolienbahnbereichabschnitten (B) ausgebildet ist, mit einer im wesentlichen konstanten, ersten linearen Bewegungsgeschwindigkeit (V1) ausgelegt ist, und mit einem Bahnaufnahmemechanismus (52), der von der Formgebungsstation (38) beabstandet ist und dazu ausgelegt ist, die abgegebene Kunststoffolienbahn (22) mit einer im wesentlichen konstanten, zweiten linearen Bewegungsgeschwindigkeit (V2), die im wesentlichen der ersten linearen Bewegungsgeschwindigkeit (V1) entspricht, zwangsläufig aufzunehmen, und mit einer weiteren Bahnhandhabungsvorrichtung (60a), die sich zwischen der Formgebungsstation (38) und dem Bahnaufnahmemechanismus (52) anordnen läßt, um an der sich bewegenden Kunststoffolienbahn (22) anzugreifen und nacheinander einen vorbestimmten Längsabschnitt jedes der verschiedenen einzelnen Kunststoffolienbahnbereichabschnitte (B) momentan zu stoppen, so daß ein ausgewählter Vorgang an jedem der momentan gestoppten, einzelnen, verschiedenen, in Längsrichtung verlaufenden Bahnbereichabschnitte (B) durchgeführt werden kann,
dadurch gekennzeichnet,
daß die Bahnhandhabungsvorrichtung (60a) zum momentanen Stoppen der in Längsrichtung verlaufenden, verschiedenen Bahnbereichabschnitte (B) ohne nennenswerte Veränderung der im wesentlichen konstanten ersten und zweiten linearen Bewegungsgeschwindigkeiten (V1, V2) oder nennenswerte Aufbringung unerwünscht hoher Spannungskräfte in Längsrichtung auf die Kunststoffolienbahn (22) betreibbar ist, wobei die Bahnhandhabungsvorrichtung (60a) folgendes aufweist:
eine Halterungskonstruktion (86);
eine von der Halterungskonstruktion getragene Walzeneinrichtung zum antriebsmäßigen Angreifen an der von der Formgebungsstation (38) abgegebenen Kunststoffolienbahn (22) und zum Bewegen derselben im allgemeinen in Richtung auf den Bahnaufnahmemechanismus (52), wobei die Walzeneinrichtung folgendes beinhaltet:
eine Eingangs-Antriebswalze (90),
eine Ausgangs-Antriebswalze (94), die von der Eingangs-Antriebswalze (90) in Richtung auf den Bahnaufnahmemechanismus (52) in seitlicher Richtung beabstandet ist und allgemein parallel zu der Eingangs-Antriebswalze (90) angeordnet ist, und
eine zentrale Antriebswalze (92), die zwischen der Eingangs- und der Ausgangs-Antriebswalze (90, 94) seitlich von diesen beabstandet sowie allgemein parallel zu diesen angeordnet ist;
eine Antriebseinrichtung (100, 102, 104) zum rotationsmäßigen Antreiben der Eingangs-, Ausgangs- sowie der zentralen Antriebswalze (90, 94, 92) in einer derartigen Weise, daß ein erster und ein zweiter durchhängender Bereich (194, 204) der Kunststoffolienbahn (22) zwischen der Eingangs-Antriebswalze (90) und der zentralen Antriebswalze (92) bzw. zwischen der zentralen Antriebswalze (92) und der Ausgangs-Antriebswalze (94) gebildet werden;
eine Vakuumeinrichtung (106, 108, 132) zum Ausüben einer nachlassenden Vakuumkraft auf den ersten und den zweiten durchhängenden Bereich, um aus diesen jeweils eine erste und eine zweite Kunststoffolienbahnschleife (194, 204) zu bilden, deren jede eine Länge aufweist und sich allgemein quer zu der Einlaß-, der Auslaß- und der zentralen Antriebswalze (90, 94, 92) erstreckt;
eine Steuereinrichtung (192) zum Regulieren der Antriebseinrichtung in einer derartigen Weise, daß die Eingangs- und die Ausgangs-Antriebswalze (90, 94) kontinuierlich mit Rotationsgeschwindigkeiten angetrieben werden, die der ersten Linearbewegungsgeschwindigkeit (V1) entsprechen, und daß die zentralen Antriebswalze (92) abwechselnd gestoppt wird, um an einem ausgewählten Bereich einer der darauf befindlichen, verschiedenen Bahnbereichabschnitte (B) anzugreifen und diesen in eine stationäre Position zu bringen, wodurch die Länge der ersten Kunststoffolienbahnschleife (194) vergrößert wird und die Länge der zweiten Kunststoffolienbahnschleife (204) reduziert wird, wonach die zentrale Antriebswalze (92) gestartet und mit einer Rotationsgeschwindigkeit angetrieben wird, die höher ist als die der Eingangs- und der Ausgangs-Antriebswalzen (90, 94), bis die zentrale Antriebswalze (92) an einem entsprechenden ausgewählten Bereich eines benachbarten der verschiedenen Bahnbereichabschnitte (B) angreift, und die erste und die zweite Folienbahnschleife (194, 204) jeweils im wesentlichen auf ihre Längen verkürzt bzw. verlängert werden, die sie vor dem Stoppen der zentralen Antriebswalze (92) besaßen.

2. Bahnhandhabungsvorrichtung nach Anspruch 1, wobei die Vakuumeinrichtung weiterhin gekennzeichnet ist durch:
einen ersten und einen zweiten Vakuumbehälter (106 108) mit offenen Enden (110, 112), die der Eingangs-, der Ausgangs- und der zentralen Antriebswalze zugewandt sind, wobei sich die erste und die zweite Kunststoffolienbahnschleife (194, 204) durch die offenen Enden hindurch in das Innere des ersten bzw. des zweiten Vakuumbehälters hineinerstrecken, und durch eine Vakuumpumpeneinrichtung (132) mit einem Eingangsbereich (136, 138), der mit dem Inneren der Vakuumbehälter kommuniziert, um die nachlassende Vakuumkraft auf den ersten und den zweiten durchhängenden Bereich auszuüben, aus dem die erste und die zweite Kunststoffolienbahnschleife (194, 204) gebildet werden.

3. Bahnhandhabungsvorrichtung nach Anspruch 1 oder 2, weiterhin dadurch gekennzeichnet, daß die Längen der ersten und der zweiten Kunststofffolienbahnschleife (194, 204) innerhalb des ersten und des zweiten Vakuumbehälters (106, 108) durch Positionserfassungsvorrichtungen kontinuierlich überwacht werden.

4. Bahnhandhabungsvorrichtung nach Anspruch 3, dadurch gekennzeichnet, daß die Positionserfassungsvorrichtungen folgendes aufweisen:
eine voneinander beabstandete Reihe fotoelektrischer Erfassungsempfänger (142a bis 162a), die sich entlang des ersten und des zweiten Vakuumbehälters (106, 108) in Richtungen erstrecken, die allgemein parallel zu den Längen der ersten und der zweiten Kunststoffolienbahnschleife (194, 206) in dem ersten und dem zweiten Vakuumbehälter sind.

5. Bahnhandhabungsvorrichtung nach Anspruch 4,
dadurch gekennzeichnet,
daß der erste und der zweite Vakuumbehälter (106, 108) Seite an Seite angeordnet sind und durch eine gemeinsame, zentrale Wandkonstruktion (118) getrennt sind, die sich allgemein parallel zu den Längen der ersten und der zweiten Kunststoffolienbahnschleife (194, 204) erstreckt,
sowie äußere Seitenwände (120, 122) aufweisen,
die der gemeinsamen zentralen Wandkonstruktion zugewandt und allgemein parallel zu dieser sind, und daß die voneinander beabstandete Reihe fotoelektrischer Erfassungsempfänger (142a bis 162a) eine voneinander beabstandete Reihe fotoelektrischer Strahlsendeeinheiten (142 bis 162), die an den äußeren Seitenwänden positioniert sind, sowie eine zugeordnete Reihe fotoelektrischer Strahlempfangseinheiten (142a bis 150a; 154a bis 162a), die an der gemeinsamen zentralen Wandkonstruktion positioniert sind, beinhaltet.

6. Bahnhandhabungsvorrichtung nach einem der Ansprüche 1 bis 5, dadurch gekennzeichnet, daß die Steuereinrichtung (192) ferner aufweist:
eine Einrichtung (262; 148, 150; 160, 162), die auf eine erfaßte übermäßige Verkürzung oder Verlängerung einer der ersten und zweiten Kunststoffolienbahnschleifen (194, 204) anspricht, um den Rotationsbetrieb der zentralen Antriebswalze (92) und/oder der Ausgangs-Antriebswalze (94) momentan einzustellen, um die übermäßige Verkürzung oder Verlängerung zu kompensieren.

7. Bahnhandhabungsvorrichtung nach einem der Ansprüche 1 bis 6, dadurch gekennzeichnet, daß ferner eine Einrichtung (284) zum Einstellen der Breiten des ersten und des zweiten Vakuumbehälters (106, 108) in Richtungen vorgesehen ist, die parallel zu der Breite von Kante zu Kante der Kunststoffolienbahn sind, um dadurch Variationen in der Breite von Kante zu Kante der jeweiligen, durch die Bahnhandhabungsvorrichtung hindurchbewegten Kunststoffolienbahn (22) zu kompensieren.

8. Bahnhandhabungsvorrichtung nach Anspruch 7, dadurch gekennzeichnet, daß der erste und der zweite Vakuumbehälter (106, 108) eine Seitenwand (128, 130) besitzt, die relativ zu dem Rest der Vakuumbehälter nach innen und nach außen beweglich ist, und daß die Einstelleinrichtung (284) nach innen und nach außen verstellbare bewegliche Seitenwände (128, 130) beinhaltet.

9. Bahnhandhabungsvorrichtung nach einem der Ansprüche 1 bis 8, dadurch gekennzeichnet, daß eine Einrichtung zum Erfassen (230) der gestoppten Längsrichtungs-Ausrichtung jedes der verschiedenen, einzelnen Kunststoffolienbahnbereiche (B) relativ zu der zentralen Antriebswalze (92) vorgesehen ist.

10. Bahnhandhabungsvorrichtung nach einem der Ansprüche 1 bis 8, dadurch gekennzeichnet, daß es sich bei der Formgebungsstation (38) um eine Beutelbildungsstation handelt, die an der sich bewegenden Kunststoffolienbahn (22) eine in Längsrichtung aneinander angrenzende Reihe miteinander verbundener, einzelner Kunststofffolienbeutel (B) bildet, die die unterschiedlichen Bahnbereichabschnitte aufweisen.

11. Bahnhandhabungsvorrichtung nach Anspruch 10, dadurch gekennzeichnet, daß jeder einzelner Kunststoffolienbeutel (B) mit seinen in Längsrichtung benachbarten, einzelnen Kunststoffolienbeutelbereichen entlang eines Paares in Längsrichtung voneinander beabstandeter Perforationslinien (50) verbunden ist, die in seitlicher Richtung über die Kunststoffolienbahn hinweg ausgebildet sind,
und daß die Erfassungseinrichtung (230) eine Perforationslinien-Erfassungseinrichtung (232, 254) zum Erfassen der Position einer der Perforationslinien beinhaltet, die jedem der einzelnen Beutelbereiche zugeordnet sind.

12. Bahnhandhabungsvorrichtung nach Anspruch 11, dadurch gekennzeichnet, daß die Perforationslinien-Erfassungseinrichtung eine Einrichtung (254) zum Hindurchleiten einer elektrischen Entladung durch die eine der Perforationslinien (50) jedes einzelnen Beutelbereichs (B) bei Annäherung desselben an die zentrale Antriebswalze aufweist.

13. Bahnhandhabungsvorrichtung nach Anspruch 12, dadurch gekennzeichnet, daß die Einrichtung zum Hindurchleiten einer elektrischen Entladung durch die eine Perforationslinie folgendes aufweist:
ein elektrisch aufgeladenes Elektrodenelement (232), das auf einer Seite eines Bereichs der ersten Kunststoffolienbahnschleife (194) angeordnet ist, und
ein elektrisches Leiterelement (254), das auf der gegenüberliegenden Seite des Bereichs der ersten Kunststoffolienbahnschleife angeordnet ist und dem Elektrodenelement zugewandt ist.

14. Bahnhandhabungsvorrichtung nach einem der Ansprüche 1 bis 13, dadurch gekennzeichnet, daß die Steuereinrichtung ferner eine Einrichtung (198, 202, 210) aufweist, die auf eine erfaßte Längsrichtungs-Fehlausrichtung zwischen den einzelnen gestoppten Beutelbereichen (B) und der zentralen Antriebswalze (92) anspricht, um den Rotationsbetrieb der zentralen Antriebswalze (92) und/oder der Ausgangs-Antriebswalze (94) vorübergehend derart zu verstellen, daß eine Längsrichtungs-Wiederausrichtung zwischen den gestoppten einzelnen Beutelbereichen und der zentralen Antriebswalze erzielt wird.

15. Bahnhandhabungsvorrichtung nach Anspruch 13 oder 14, weiterhin gekennzeichnet durch:
eine Stromerfassungseinrichtung (260) zum Erfassen einer elektrischen Entladung von dem Elektrodenelement (232) durch die eine der Perforationslinien (50) hindurch zu dem Leiterelement (254) sowie zum darauf ansprechenden Aussenden eines den Strom aufzeigenden Ausgangssignals (262),
sowie dadurch gekennzeichnet, daß die Steuereinrichtung (198, 202, 210) dann, wenn der Zeitpunkt des Ausgangssignals relativ zu der Rotationsposition der zentralen Antriebswalze eine Längsrichtungs-Fehlausrichtung zwischen den einzelnen gestoppten Beutelbereichen und der zentralen Antriebswalze (92) aufzeigt, zum vorübergehenden Einstellen des Rotationsbetriebs der zentralen Antriebswalze (92) und/oder der Ausgangs-Antriebswalze (94) betreibbar ist, um eine Längsrichtungs-Neuausrichtung zwischen den gestoppten einzelnen Beutelbereichen und der zentralen Antriebswalze zu erzielen.

16. Bahnhandhabungsvorrichtung nach einem der Ansprüche 13 bis 15, dadurch gekennzeichnet, daß das Elektrodenelement (232) in dem ersten Vakuumbehälter (106) schwenkbar angebracht ist und mit der ersten Kunststoffolienschleife (194) bei übermäßiger Verkürzung derselben in Berührung bringbar ist, um das Elektrodenelement aus dem ersten Vakuumbehälter heraus zu verschwenken.

17. Bahnhandhabungsvorrichtung nach Anspruch 10, dadurch gekennzeichnet, daß es sich bei der Kunststoffolienbahn (22) um einen Schlauch (32) handelt, der der Beutelbildungsstation (38) in einer flach liegenden Bahnkonfiguration kontinuierlich zugeführt wird, und daß die Beutelbildungsstation (38) ein Heizelement an die flachliegende Bahn heranführt, um eine in Längsrichtung von einander beabstandete Reihe von Wärmeschweißlinien (40) zu bilden, um dadurch die geschlossenen Enden der Reihe der einander in Längsrichtung benachbarten, miteinander verbundenen Kunststoffolienbeutel (B) zu bilden, deren offene Enden durch eine in Längsrichtung voneinander beabstandete Reihe von Perforationen (50) gebildet sind, die durch die Beutelbildungsstation nahe den Wärmeschweißlinien ausgebildet sind.

18. Bahnhandhabungsvorrichtung nach einem der Ansprüche 1 bis 17, weiterhin dadurch gekennzeichnet, daß ein Verschlußelement-Anbringmaschinenbereich (60) in der Nähe der Eingangs-Antriebswalze (90), der Ausgangs-Antriebswalze (94) und der zentralen Antriebswalze (92) positioniert ist, wobei die Maschine einen Mechanismus (316) aufweist, der ein flexibles Verschlußelement (62) in der Nähe des zu öffnenden Endes (50) jedes einzelnen Beutels (B) positioniert, die nacheinander an der zentralen Antriebswalze gestoppt werden, und daß eine Einrichtung (320) zum festen Anbringen eines Endbereichs eines Verschlußelements (62) an einem seitlichen Randbereich (42a) jedes der aufeinander folgenden, einander benachbarten Kunststoffolienbeutel (B) vorgesehen ist.

19. Bahnhandhabungsvorrichtung nach Anspruch 18, dadurch gekennzeichnet, daß die Verschlußelement-Anbringmaschine (60) eine Rolle aus Kunststofffolien-Verschlußelementbahnmaterial (64), eine Einrichtung (300) zum steuerbaren Abziehen des Verschlußelementmaterials von der Rolle, eine Einrichtung (308, 310) zum in seitlicher Richtung erfolgenden Abschneiden des von der Rolle abgezogenen Verschlußelementbahnmaterials (68) zur Bildung einer Reihe von Kunststoffolien-Verschlußelementen (62) aus diesem, sowie eine Einrichtung (316) zum Voranbewegen der Verschlußelemente in Richtung auf die zentrale Antriebswalze beinhaltet, und daß die Einrichtung zum festen Anbringen ein Heizwerkzeugelement (320) beinhaltet, das zum Heißschweißen des Endbereichs jedes Verschlußelements (62) an den seitlichen Randbereich seines zugehörigen Beutels betreibbar ist.

20. Bahnhandhabungsvorrichtung nach Anspruch 19, dadurch gekennzeichnet, daß das Heizwerkzeugelement (320) zur Bildung eines kreisförmigen Heißschweißbereichs (74) zwischen dem Enbereich (62a) jedes Verschlußelements (62) und dem seitlichen Randbereich seines zugehörigen Beutels betätigbar ist.

21. Bahnhandhabungsvorrichtung nach einem der Ansprüche 18 bis 20, dadurch gekennzeichnet, daß der Verschlußelement-Anbringbereich ferner eine Einrichtung (320) aufweist zur Bildung einer Öffnung (76) durch jeden der Verschlußelement-Endbereiche (62a) hindurch und durch den seitlichen Randbereich (42a) seines zugehörigen Beutels hindurch, durch die das gegenüberliegende Ende (62b) des Verschlußelements hindurchgeführt werden kann.

22. Bahnhandhabungsvorrichtung nach Anspruch 21, dadurch gekennzeichnet, daß es sich bei der Öffnung (76) im wesentlichen um einen geraden Schlitz mit einer Länge handelt, die geringer ist als die Breite ihres zugehörigen Verschlußelements.

23. Bahnhandhabungsvorrichtung nach einem der Ansprüche 18 bis 22, dadurch gekennzeichnet, daß der Verschlußelement-Anbringmaschinenbereich (60) ferner eine Einrichtung (318) aufweist zum lösbaren Festhalten des gegenüberliegenden Endes (62b) jedes Verschlußelements an seinem zugehörigen Beutel, so daß sich das befestigte Verschlußelement in Längsrichtung über eine äußere Seitenfläche der Kunststoffolienbahn erstreckt.

24. Verfahren zum Bilden durchhängender Bahnschleifen (194, 204) während einer in Längsrichtung erfolgenden Bewegung einer sich kontinuierlich bewegenden, langgestreckten Bahn (22) aus flexiblem Material zum Zweck der Ausführung eines Vorgangs an einem vorübergehend gestoppten Bereich der Bahn an einer Zubehörstation (60), die sich zwischen einem Eingangsabschnitt (38) und einem Ausgangsabschnitt (52) einer Bahnhandhabungslinie (60a) befindet, wobei die durchhängenden Bahnschleifen angrenzend an Längsrichtungsabschnitte der sich bewegenden Bahn in Form von in Querschlaufen gelegte Betriebskonfigurationen ausgebildet werden, wobei das Verfahren gekennzeichnet ist durch folgende Schritte:
Befördern der sich bewegenden Bahn (22) über die Seitenflächen einer ersten (90), einer zweiten (92) und einer dritten Walze (94), die voneinander beabstandet sind, entlang eines anfänglichen Bahnantriebsweges, wobei die zweite Walze (92) zwischen der ersten (90) und der dritten Walze (94) positioniert ist;
rotationsmäßiges Bewegen der ersten (90), der zweiten (92) und der dritten Walze (94) zum Antreiben der Bahn (22) in Längsrichtung entlang des anfänglichen Bahnantriebsweges; und
Neuaus richten aneinander angrenzender Längsabschnitte der sich bewegenden Bahn in die in Schleifen gelegten Betriebskonfigurationen derselben durch vorübergehendes Ändern der Rotationsgeschwindigkeit wenigstens einer der drei Walzen (90, 92, 94) zur Bildung eines ersten durchhängenden Bahnbereichs (194) zwischen der ersten (90) und der zweiten Walze (92) sowie eines zweiten durchhängenden Bahnbereichs (204) zwischen der zweiten Walze (92) und der dritten Walze (94), sowie Aufbringen nachlassender Kräfte auf den ersten und den zweiten durchhängenden Bahnbereich zum Halten derselben in Schleifenkonfigurationen, die sich allgemein quer zu dem anfänglichen Bahnantriebsweg erstrecken.

25. Verfahren nach Anspruch 24, weiterhin dadurch gekennzeichnet, daß der Schritt der vorübergehenden Änderung der Rotationsgeschwindigkeit wenigstens einer der drei Walzen (90, 92, 94) durch Verlangsamen der Rotationsgeschwindigkeit der dritten Walze (94) zum Initiieren der Bildung des ersten durchhängenden Bahnbereichs (194) sowie durch anschließendes Steigern der Rotationsgeschwindigkeit der zweiten Walze (92) zum Verkürzen des ersten durchhängenden Bahnbereichs (104) sowie zum Initiieren der Bildung des zweiten durchhängenden Bahnbereichs (204) erfolgt.

26. Verfahren nach Anspruch 24 oder 25, dadurch gekennzeichnet, daß der Schritt der Erhöhung der Rotationsgeschwindigkeit der zweiten Walze (92) durch rotationsmäßigen Stufenbetrieb der zweiten Walze erfolgt.

27. Verfahren nach einem der Ansprüche 24 bis 26, dadurch gekennzeichnet, daß der Schritt der Aufbringung nachlassender Kräfte auf den ersten und den zweiten durchhängenden Bahnbereich (194, 204) durch Erzeugung unterschiedlicher Druckkräfte über den ersten und den zweiten durchhängenden Bahnbereich erfolgt.

28. Verfahren nach Anspruch 27, dadurch gekennzeichnet, daß der Schritt der Erzeugung unterschiedlicher Druckkräfte durch Aufbringen einer Vakuumkraft auf eine Seite jedes des ersten und des zweiten durchhängenden Bahnbereichs (194, 204) erfolgt.

29. Verfahren nach einem der Ansprüche 24 bis 28, dadurch gekennzeichnet, daß während der Bewegung der Bahn (22) durch die Walzen die Bahn von einer Beutelbildungsstation (20) mit einer linearen Ausgangsgeschwindigkeit (V1) zu der ersten Walze (90) befördert wird, und daß das Verfahren ferner den Schritt eines Variierens der Rotationsgeschwindigkeit der ersten Walze beinhaltet, um Variationen bei der linearen Ausgangsgeschwindigkeit zu kompensieren.

30. Verfahren nach einem der Ansprüche 24 bis 29, dadurch gekennzeichnet, daß die durchhängenden Bahnbereiche (194, 204) während der Bewegung der Bahn durch die Walzen eine ursprüngliche relative Längenbeziehung aufweisen, und daß das Verfahren ferner folgende Schritte umfaßt: Intermittierendes Stoppen der zweiten Walze (92) zum Stoppen eines auf dieser befindlichen Bahnbereichs sowie zum Verlängern eines der durchhängenden Bahnbereiche unter Verkürzung des anderen Bahnbereichs, sowie anschließendes rotationsmäßiges Beschleunigen der zweiten Walze zum Zurückführen der durchhängenden Bahnbereiche in die ursprüngliche relative Längenbeziehung derselben.

31. Verfahren nach einem der Ansprüche 24 bis 30, gekennzeichnet durch folgende Schritte:
Erfassen einer vertikalen Längenabweichung eines der durchhängenden Bahnbereiche (194, 204) von einer erwünschten vertikalen Länge desselben sowie vorübergehendes Ändern der Rotationsgeschwindigkeit einer der Walzen zum Zurückführen des einen durchhängenden Bahnbereichs auf seine gewünschte vertikale Länge.

32. Verfahren nach einem der Ansprüche 24 bis 31, wobei die kontinuierliche, sich bewegende, langgestreckte Bahn aus flexiblem Material eine flachliegende rohrförmige Bahn (22) ist, die eine Beutelbildungsstation (20) durchläuft, bevor der Schritt der Beförderung der sich bewegenden Bahn über die erste, die zweite und die dritte Walze erfolgt, wobei die geschlossenen Böden aufeinander folgender, aneinander angrenzender Beutel (B) durch eine in Längsrichtung voneinander beabstandete Reihe von Heißschweißungen (40) gebildet werden, die sich quer über die Bahn (22) erstrecken und einander benachbarte Perforationen (50) aufweisen, die das obere Ende des nächsten Beutels der Reihe von Beuteln (B) bilden, wobei das Verfahren ferner durch folgende Schritte gekennzeichnet ist:
Bereitstellen einer Verschlußelementmaschine (60) mit einer in Längsrichtung abwickelbaren Bahn (64) aus Kunststoffolien-Verschlußelementbahnmaterial (68);
in Längsrichtung erfolgendes Abwickeln eines Bereichs der Verschlußelementbahn (68) entlang eines gesteuerten Weges;
nacheinander erfolgendes Abtrennen aufeinander folgender Längsrichtungssegmente von dem sich bewegenden Verschlußelement (68) zur Bildung einer Reihe länglicher, flexibler Beutelverschlußelemente (62);
in Querrichtung erfolgende Beförderung jedes Verschlußelements (62) zu einer Position, in der es sich mit seiner Längserstreckung quer über einen äußeren Seitenflächenbereich (42a) der Beutelbahn (22) erstreckt, wobei ein innerer Endbereich (62a) des Verschlußelements über dem seitlichen Randbereich der Beutelbahn liegt; und Heißsiegeln des inneren Endes (62a) der Verschlußelemente an den seitlichen Randbereich der Beutelbahn an in Längsrichtung voneinander beabstandeten Stellen derselben.

33. Verfahren nach Anspruch 32, gekennzeichnet durch lösbares Befestigen der äußeren Enden (62b) der Verschlußelemente (62) an dem äußeren Seitenflächenbereich der Beutelbahn.

34. Verfahren nach Anspruch 32 oder 33, dadurch gekennzeichnet, daß der Schritt der Beförderung in Querrichtung durch Übertragen jedes Verschlußelements auf einen umlaufenden Vakuumgurt (316) erfolgt, wobei der äußere Endbereich (62a) des Verschlußelements in seitlicher Richtung von dem Vakuumgurt nach außen ragt, der zum Bewegen des Verschlußelements in die genannte Position desselben betätigbar ist.

35. Verfahren nach einem der Ansprüche 32 bis 34, weiterhin dadurch gekennzeichnet, daß aufeinander folgende, in Längsrichtung voneinander beabstandete Abschnitte (B) der Beutelbahn während der Durchführung des Heißsiegelschritts vorübergehend gestoppt werden.

36. Verfahren nach einem der Ansprüche 32 bis 35, dadurch gekennzeichnet, daß der Heißsiegelschritt durch Ausbilden einer Heißsiegellinie gebildet wird, die sich wenigstens über einen Teil einer nicht linearen, geschlossenen Strecke erstreckt.

37. Verfahren nach einem der Ansprüche 32 bis 36, weiterhin dadurch gekennzeichnet, daß ein Schlitz (76) durch den inneren Endbereich (62a) jedes Verschlußelements hindurch ausgebildet wird.

38. Verfahren nach Anspruch 37, dadurch gekennzeichnet, daß der Heißsiegelschritt durch Bilden einer allgemein kreisförmigen Wärmeschweißlinie (74) ausgeführt wird und daß der Schritt der Bildung eines Schlitzes (76) in einer derartigen Weise durchgeführt wird, daß der Schlitz innerhalb der allgemein kreisförmigen Wärmeschweißlinie positioniert ist.

39. Verfahren nach einem der Ansprüche 33 bis 38, weiterhin gekennzeichnet durch den Schritt der Heißsiegelung eines Randbereichs des Verschlußelements (62) zur durch Schweißen erfolgenden Verstärkung derjenigen Bereiche, die die äußeren Enden (62b) der Verschlußelemente bilden.

## Revendications

1. Dispositif de manipulation de bande (60a) destiné à être utilisé en liaison avec un dispositif de fabrication de film plastique à haut rendement comprenant un poste de formage (38) pouvant produire en continu, à une première vitesse de déplacement linéaire sensiblement constante (V1), une bande de film plastique (22) sur laquelle est formée une série de sections de portion de bande de film plastique longitudinalement adjacentes reliées entre elles individuelles différenciées (B), et un mécanisme de réception de toile (52) espacé et séparé du poste de formage (38) et pouvant saisir énergiquement la bande de film plastique produite (22) à une deuxième vitesse de déplacement linéaire sensiblement constante (V2) sensiblement égale à la première vitesse de déplacement linéaire (V1), et un dispositif supplémentaire de manipulation de bande (60a) pouvant être interposé entre le poste de formage (38) et le mécanisme de réception de bande (52) pour prendre la bande de film plastique en déplacement (22) et arrêter momentanément, séquentiellement, une section longitudinale prédéterminée de chacune desdites sections de portion de bande de film plastique individuelles différenciées (B), de façon qu'une opération choisie puisse être effectuée sur chaque section de portion de bande longitudinale individuelle différenciée momentanément stoppée (B),
caractérisé en ce que
le dispositif de manipulation de bande (60a) peut être actionné pour arrêter momentanément lesdites sections de portion de bande différenciées longitudinales (B) sans modifier sensiblement les première et deuxième vitesses de déplacement linéaire sensiblement constantes (V1, V2) ou imposer des forces de tension longitudinales d'une intensité indésirable dans la bande de film plastique (22), ledit dispositif de manipulation de bande (60a) comprenant :
une structure de support (86);
des moyens de rouleau, portés par ladite structure de support, pour entraîner la bande de film plastique (22) produite par le poste de formage (38) et la transporter généralement vers le mécanisme de réception de bande (52), lesdits moyens de rouleau comprenant :
un rouleau d'entraînement d'entrée (90),
un rouleau d'entraînement de sortie (94) séparé et espace latéralement dudit rouleau d'entraînement d'entrée (90), vers le mécanisme de réception de bande (52), généralement parallèle audit rouleau d'entraînement d'entrée (90), et
un rouleau d'entraînement central (92) situé entre lesdits rouleaux d'entraînement d'entrée et de sortie généralement parallèle à et espacé latéralement de ceux-ci;
des moyens d'entraînement (100, 102, 104) pour entraîner en rotation lesdits rouleaux d'entraînement d'entrée, de sortie et central (90, 94, 92) de telle façon que des première et seconde portions relâchées (192, 204) de la bande de film plastique (22) soient respectivement formées entre ledit rouleau d'entraînement d'entrée (90) et ledit rouleau d'entraînement central (92), et entre ledit rouleau d'entraînement central (92) et ledit rouleau d'entraînement de sortie (94);
des moyens d'aspiration (106, 108, 132) pour exercer une force de courbement par aspiration sur lesdites première et seconde portions relâchés pour former respectivement à partir de celles-ci des première et deuxième ondulations de bande de film plastique (194, 204), ayant chacune une certaine longueur et s'étendant généralement transversalement auxdits rouleaux d'entraînement d'entrée, de sortie et central (90, 94, 92);
des moyens de commande (192) pour réguler lesdits moyens d'entraînement de telle façon que :
lesdits rouleaux d'entraînement d'entrée et de sortie (90, 94) soient continuellement entraînés à des vitesses de rotation correspondant à ladite première vitesse de déplacement linéaire; et
ledit rouleau d'entraînement central (92) soit alternativement arrêté pour prendre et positionner sur lui-même de façon fixe une portion choisie de l'une desdites sections de portion de bande différenciées (B), en provoquant ainsi l'augmentation de la longueur de ladite première ondulation de bande de film plastique (194) et la diminution de la longueur de ladite deuxième ondulation de bande de film plastique (204), et étant ensuite démarré et entraîné à une vitesse de rotation plus élevée que celle desdits rouleaux d'entraînement d'entrée et de sortie (90, 94) jusqu'à ce qu'une portion choisie correspondante de l'une adjacente desdites sections de portion de bande différenciées (B) soit prise par ledit rouleau d'entraînement central (92), et lesdites première et deuxième ondulations de bande de film (194, 204) soient respectivement raccourcie et allongée sensiblement aux longueurs qu'elles avaient avant l'arrêt dudit rouleau d'entraînement central (92).

2. Dispositif de manipulation de bande selon la revendication 1 dans lequel lesdits moyens d'aspiration sont de plus caractérisés par :
des premier et deuxième caissons d'aspiration (106, 108) possédant des extrémités ouvertes (110, 112) faisant face auxdits rouleaux d'entraînement d'entrée, de sortie et central, lesdites première et deuxième ondulations de bande de film plastique (194, 204) s'étendant à travers lesdites extrémités ouvertes à l'intérieur desdits premier et deuxième caissons d'aspiration, respectivement, et des moyens de pompe d'aspiration (132), possédant une portion d'entrée (136, 138) communiquant avec les intérieurs desdits caissons d'aspiration, pour exercer ladite force de courbement par aspiration sur lesdites première et seconde portions relâchées dans lesquelles lesdites première et deuxième ondulations de bande de film plastique (194, 204) sont formées.

3. Dispositif de manipulation de bande selon la revendication 1 ou 2 caractérisé de plus en ce que les longueurs desdites première et deuxième ondulations de bande de film plastique (194, 204) dans lesdits premier et deuxième caissons d'aspiration (106, 108) sont continuellement surveillées par des dispositifs de détection de position.

4. Dispositif de manipulation de bande selon la revendication 3 caractérisé en ce que lesdits dispositifs de détection de position comprennent :
une série de récepteurs de détection photoélectriques espacés (142a-162a), s'étendant le long desdits premier et deuxième caissons d'aspiration (106, 108) dans des directions généralement parallèles aux longueurs desdites première et deuxième ondulations de bande de film plastique (194, 206) dans lesdits premier et deuxième caissons d'aspiration.

5. Dispositif de manipulation de bande selon la revendication 4 caractérisé en ce que :
lesdits premier et deuxième caissons d'aspiration (106, 108) sont disposés côte à côte séparés par une structure de paroi centrale commune (118) s'étendant généralement parallèlement aux longueurs desdites première et deuxième ondulations de bande de film plastique (194, 204), et ont des parois latérales extérieures (120, 122) qui font face et sont généralement parallèles à ladite structure de paroi centrale commune, et
ladite série de récepteurs de détection photoélectriques (142a-162a) comprend une série d'unités d'émission de rayons photoélectriques (142-162) positionnées sur lesdites parois latérales extérieures, et une série d'unités de réception de rayons photoélectriques associées (142a-150a; 154a-162a) positionnées sur ladite structure de paroi centrale commune.

6. Dispositif de manipulation de bande selon l'une quelconque des revendications 1-5 caractérisé en ce que lesdits moyens de commande (192) comprennent de plus :
des moyens (262; 148, 150; 160, 162), sensibles à un allongement ou un raccourcissement détecté excessif d'une desdites première et deuxième ondulations de bande de film plastique (194, 204) pour ajuster momentanément l'actionnement en rotation d'au moins un desdits rouleaux d'entraînement central et de sortie (92, 94) pour compenser pour ledit allongement ou raccourcissement excessif.

7. Dispositif de manipulation de bande selon l'une quelconque des revendications 1-6 caractérisé de plus en ce qu'il comprend:
des moyens (284) pour ajuster les largeurs desdits premier et deuxième caissons d'aspiration (106, 108), dans des directions parallèles à la largeur bord à bord de ladite bande de film plastique, pour compenser des variations de largeur bord à bord de la bande de film plastique particulière (22) traversant ledit dispositif de manipulation de bande.

8. Dispositif de manipulation de bande selon la revendication 7 caractérisé en ce que
chacun desdits premier et deuxième caissons d'aspiration (106, 108) possède une paroi latérale (128, 130) pouvant être déplacée vers l'intérieur et vers l'extérieur par rapport au reste des caissons d'aspiration, et
lesdits moyens (284) pour ajuster comprennent des parois latérales d'ajustement pouvant être déplacées vers l'intérieur et vers l'extérieur (128, 130).

9. Dispositif de manipulation de bande selon l'une quelconque des revendications 1-8 caractérisé en ce qu'il comprend des moyens pour détecter (230) l'orientation longitudinale à l'arrêt de chacune desdites portions de bande de film plastique différenciées individuelles (B) par rapport audit rouleau d'entraînement central (92).

10. Dispositif de manipulation de bande selon l'une quelconque des revendications 1-8 caractérisé en ce que ledit poste de formage (38) est un poste de formage de sac qui définit sur la bande de film plastique en mouvement (22) une série de sacs de film plastique individuels reliés entre eux longitudinalement adjacents (B) qui comprennent lesdites sections de portion de bande différenciées.

11. Dispositif de manipulation de bande selon la revendication 10 caractérisé en ce que chacun desdits sacs de film plastique individuels (B) est raccordé à ses portions de sac de film plastique individuelles longitudinalement adjacentes le long d'une paire de lignes de perforations espacées longitudinalement (50) formées transversalement dans ladite bande de film plastique, et
lesdits moyens pour détecter (230) comprennent des moyens de détection de ligne de perforations (232, 254) pour détecter la position d'une des lignes de perforations associée à chacune desdites portions de sac individuelles.

12. Dispositif de manipulation de bande selon la revendication 11 caractérisé en ce que lesdits moyens de détection de ligne de perforations comprennent :
des moyens (254) pour faire passer une décharge électrique au travers de ladite une des lignes de perforations (50) de chacune desdites portions de sac individuelles (B) lorsqu'elle approche dudit rouleau d'entraînement central.

13. Dispositif de manipulation de bande selon la revendication 12 caractérisé en ce que lesdits moyens pour faire passer une décharge électrique au travers de ladite une des lignes de perforations comprennent :
un élément d'électrode chargé électriquement (232) positionné d'un côté d'une portion de ladite première ondulation de bande de film plastique (194), et
un élément de conducteur électrique (254) positionné du côté opposé de ladite portion de ladite première ondulation de bande de film plastique et faisant face audit élément d'électrode.

14. Dispositif de manipulation de bande selon l'une quelconque des revendications 1-13 caractérisé en ce que lesdits moyens de commande comprennent de plus :
des moyens (198, 202, 210), sensibles à un défaut d'alignement longitudinal détecté entre les portions de sac individuelles arrêtées (B) et ledit rouleau d'entraînement central (92), pour ajuster temporairement l'actionnement en rotation d'au moins l'un desdits rouleaux d'entraînement central (92) et de sortie (94) pour effectuer un réalignement longitudinal entre les portions de sac individuelles arrêtées et ledit rouleau d'entraînement central.

15. Dispositif de manipulation de bande selon la revendication 13 ou 14 caractérisé de plus par :
des moyens de détection de courant (260) pour détecter une décharge électrique allant dudit élément d'électrode (232) en passant par ladite une desdites lignes de perforations (50) audit élément de conducteur (254) et transmettre en réponse un signal de sortie indicateur d'un courant (262), et
dans lequel lesdits moyens de commande (198, 202, 210) peuvent, lorsque la synchronisation dudit signal de sortie par rapport à la position en rotation dudit rouleau d'entraînement central indique un défaut d'alignement longitudinal entre les portions de sac individuelles arrêtées et ledit rouleau d'entraînement central (92), ajuster temporairement l'actionnement en rotation d'au moins un desdits rouleaux d'entraînement central (92) et de sortie (94) pour effectuer un réalignement longitudinal entre les portions de sac individuelles arrêtées et ledit rouleau d'entraînement central.

16. Dispositif de manipulation de bande selon l'une quelconque des revendications 13-15 caractérisé en ce que
ledit élément d'électrode (232) est monté pivotant dans ledit premier caisson d'aspiration (106) et peut être entrainé par ladite première ondulation de film plastique (194), lors d'un raccourcissement excessif de celle-ci, pour faire pivoter ledit élément d'électrode hors dudit premier caisson d'aspiration.

17. Dispositif de manipulation de bande selon la revendication 10 caractérisé en ce que la bande de film plastique (22) est un tube (32) délivré en continu au poste de formage de sac (38) aplati en une configuration en bande et ledit poste de formage de sac (38) applique un élément chauffé à la bande aplatie pour réaliser une série de lignes de soudure thermique espacées longitudinalement (40) pour définir les extrémités fermées de ladite série de sacs de film plastique reliés entre eux longitudinalement adjacents (B) dont les extrémités ouvertes sont définies par des séries de perforations longitudinalement espacées (50) formées à côté desdites lignes de soudure thermique par ledit poste de formage de sac.

18. Dispositif de manipulation de bande selon l'une quelconque des revendications 1-17 caractérisé de plus en ce qu'une portion de machine de fixation d'élément de cordon (60) est positionnée adjacente aux rouleaux d'entraînement d'entrée (90), de sortie (94) et central (92), ladite machine possédant un mécanisme (316) qui positionne un organe d'élément de cordon flexible (62) adjacent à l'extrémité ouvrable (50) de chaque sac individuel (B) arrêté séquentiellement audit rouleau d'entraînement central, et
des moyens (320) pour fixer fermement une portion d'extrémité d'un organe d'élément de cordon (62) à une portion de bord latéral de chaque sac de film plastique adjacent successif (B).

19. Dispositif de manipulation de bande selon la revendication 18 caractérisé en ce que ladite machine de fixation d'élément de cordon (60) comprend un rouleau de matériau de bande d'élément de cordon de film plastique (64), des moyens (300) pour tirer de façon régulée ledit matériau d'élément de cordon dudit rouleau, des moyens (308, 310) pour couper latéralement le matériau de bande d'élément de cordon (68) tiré dudit rouleau pour former à partir de celui-ci une série d'éléments de cordon de film plastique (62), et des moyens (316) pour faire avancer les éléments de cordon vers ledit rouleau d'entraînement central, et
lesdits moyens pour fixer fermement comprennent un élément de matrice de chauffage (320) servant à souder thermiquement ladite portion d'extrémité de chaque élément de cordon (62) à ladite portion de bord latéral de son sac associe.

20. Dispositif de manipulation de bande selon la revendication 19 caractérisé en ce que ledit élément de matrice de chauffage (320) sert à former une zone circulaire de soudure thermique (74) entre ladite portion d'extrémité (62a) de chaque élément de cordon (62) et ladite portion de bord latéral de son sac associé.

21. Dispositif de manipulation de bande selon l'une quelconque des revendications 18-20 caractérisé en ce que ladite portion de fixation d'élément de cordon comprend de plus :
des moyens (320) pour former une ouverture (76) dans chacune desdites portions d'extrémité d'élément de cordon (62a), et dans sa portion associée de bord latéral de sac (42a), par lesquelles l'extrémité opposée (62b) de l'élément de cordon peut être passée.

22. Dispositif de manipulation de bande selon la revendication 21 caractérisé en ce que :
ladite ouverture (76) est une fente sensiblement rectiligne ayant une longueur inférieure à la largeur de son élément de cordon associé.

23. Dispositif de manipulation de bande selon l'une quelconque des revendications 18-22 caractérisé en ce que ladite portion de machine de fixation d'élément de cordon (60) comprend de plus :
des moyens (318) pour retenir de façon détachable l'extrémité opposée (62b) de chaque élément de cordon sur son sac associé de façon que l'élément de cordon fixé s'étende longitudinalement à travers une surface latérale extérieure de la bande de film plastique.

24. Procédé pour créer des ondulations de bande relâchées (194, 204) pendant le mouvement longitudinal d'une bande matériau flexible en mouvement continu (22), dans le but d'effectuer une opération sur une portion de la bande arrêtée temporairement à un poste auxiliaire (60) situé entre une section d'entrée (38) et une section de sortie (52) d'une ligne de manipulation de bande (60a), lesdites ondulations de bande relâchées étant des sections longitudinales adjacentes de la bande en mouvement dans des configurations opératoires ondulées transversalement, ledit procédé étant
caractérisé par les étapes consistant à :
faire passer la bande en mouvement (22) sur des surfaces latérales de premier (90), second (92) et troisième rouleaux (94) espacés mutuellement l'un de l'autre le long d'une voie d'entraînement de bande initiale, ledit deuxième rouleau (92) étant positionné entre lesdits premier (90) et troisième rouleaux (94);
faire tourner lesdits premier (90), second (92) et troisième rouleaux (94) pour entraîner longitudinalement la bande (22) le long de ladite voie d'entraînement de bande initiale; et
réorienter des sections longitudinales adjacentes de la bande en mouvement vers lesdites configurations opératoires ondulées de celles-ci en :
modifiant temporairement la vitesse de rotation d'au moins un desdits premier (90), second (92) et troisième (94) rouleaux pour engendrer une première portion de bande relâchée (194) entre lesdits premier (90) et second (92) rouleaux, et une seconde portion de bande relâchée (204) entre lesdits second (92) et troisième (94) rouleaux,
exerçant des forces de courbement sur lesdites première et seconde portions de bande relâchées pour maintenir celles-ci dans des configurations ondulées s'étendant généralement transversalement à ladite voie d'entraînement de bande initiale.

25. Procédé selon la revendication 24 caractérisé de plus en ce que :
ladite étape consistant à modifier temporairement la vitesse de rotation d'au moins un desdits premier, deuxième et troisième rouleaux (90, 92, 94) est effectuée en réduisant la vitesse de rotation dudit troisième rouleau (94) pour commencer la formation de ladite première portion de bande relâchée (194), et en augmentant ensuite la vitesse de rotation dudit deuxième rouleau (92) pour raccourcir ladite première portion de bande relâchée (194) et
en commençant la formation de ladite seconde portion de bande relâchée (204).

26. Procédé selon la revendication 24 ou 25 caractérisé en ce que :
ladite étape consistant à augmenter la vitesse de rotation dudit deuxième rouleau (92) est effectuée en échelonnant la rotation dudit deuxième rouleau.

27. Procédé selon l'une des revendications 24-26 caractérisé en ce que :
ladite étape consistant à exercer des forces de courbement sur lesdites première et seconde portions de bande relâchées (194, 204) est effectuée en créant des forces de pression différentielle à travers lesdites première et seconde portions de bande relâchées.

28. Procédé selon la revendication 27 caractérisé en ce que :
ladite étape consistant à créer des forces de pression différentielle est effectuée en imposant une force d'aspiration d'un côté de chacune desdites Première et seconde portions de bande relâchées (194, 204).

29. Procédé selon l'une quelconque des revendications 24-28 caractérisé en ce que :
pendant le mouvement de la bande (22) provoqué par lesdits rouleaux la bande est délivrée audit premier rouleau (90) par un poste de formage de sac (20) à une certaine vitesse linéaire de sortie (V1), et ledit procédé comprend de plus l'étape consistant à faire varier la vitesse de rotation dudit premier rouleau pour compenser des variations de ladite vitesse de sortie linéaire.

30. Procédé selon l'une quelconque des revendications 24-29 caractérisé en ce que :
les portions de bande relâchées (194,2()4) ont, pendant le mouvement de la bande provoqué par lesdits rouleaux, un rapport de longueur relative initiale, et ledit procédé comprend de plus les étapes consistant à arrêter par intermittence ledit deuxième rouleau (92), pour arrêter une portion de bande sur celui-ci et allonger une des portions de bande relâchées tout en raccourcissant une autre, et ensuite à accélérer la rotation dudit deuxième rouleau pour ramener les portions de bande relâchées à leur dit rapport de longueur relative initiale.

31. Procédé selon l'une quelconque des revendications 24-30 caractérisé de plus par les étapes consistant à :
détecter un écart de longueur vertical d'une des portions de bande relâchées (194, 204) par rapport à une longueur verticale souhaitée de celle-ci, et modifier temporairement la vitesse de rotation de l'un desdits rouleaux pour ramener ladite une des portions de bande relâchées à ladite longueur verticale souhaitée de celle-ci.

32. Procédé selon l'une des revendications 24-31 dans lequel la bande de matériau flexible allongé en mouvement continu est une bande tubulaire aplatie (22) passant par un poste de formage de sac (20) avant l'étape consistant à faire passer la bande en déplacement sur lesdits premier, deuxième et troisième rouleaux, où les fonds fermés de sacs adjacents successifs (B) sont formés par une série de soudures thermiques longitudinalement espacées (40) s'étendant à travers la bande (22) et présentant des perforations adjacentes (50) définissant le haut du suivant de la série de sacs (B), le procédé étant caractérisé de plus par les étapes consistant à :
utiliser une machine d'élément de cordon (60) présentant une bande se déroulant longitudinalement (64) de bande d'élément de cordon de film plastique (68);
dérouler longitudinalement une portion de ladite bande d'élément de cordon (68) suivant une voie contrôlée;
couper séquentiellement des segments longitudinaux successifs de l'élément de cordon en mouvement (68) pour former une série d'éléments de cordon de sac allongés flexibles (62);
transporter transversalement chacun des éléments de cordon (62) à une position dans laquelle il s'étend longitudinalement transversalement à travers une portion de surface latérale extérieure (42a) de la bande de sac (22), une portion d'extrémité intérieure (62a) de l'élément de cordon recouvrant ladite portion de bord latéral de la bande de sac; et
sceller thermiquement l'extrémité intérieure (62a) des éléments de cordon à ladite portion de bord latéral de la bande de sac à des emplacements espacés longitudinalement de celle-ci.

33. Procédé selon la revendication 32 caractérisé par l'étape consistant à :
fixer de façon détachable les extrémités extérieures (62b) des éléments de cordon (62) à ladite portion de surface latérale extérieure de la bande de sac.

34. Procédé selon la revendication 32 ou 33 caractérisé en ce que :
ladite étape consistant à transporter transversalement est effectuée en transférant chaque élément de cordon vers une bande tournante à aspiration (316), la portion d'extrémité extérieure (62a) de l'élément de cordon dépassant latéralement à l'extérieur de la bande à aspiration, qui sert à déplacer l'élément de cordon à ladite position de celui-ci.

35. Procédé selon l'une quelconque des revendications 32-34 caractérisé de plus par l'étape consistant à :
arrêter temporairement des sections successives longitudinalement espacées (B) de la bande de sac pendant ladite étape consistant à sceller thermiquement.

36. Procédé selon l'une quelconque des revendications 32-35 caractérisé en ce que :
ladite étape consistant à sceller thermiquement est effectuée en formant une ligne de scellement par chauffage s'étendant le long d'au moins une portion d'un trajet fermé non linéaire.

37. Procédé selon l'une quelconque des revendications 32-36 comprenant de plus l'étape consistant à :
former une fente (76) à travers chaque portion d'extrémité intérieure d'élément de cordon (62a).

38. Procédé selon la revendication 37 caractérisé en ce que ladite étape consistant à sceller thermiquement est effectuée en formant une ligne de soudure thermique généralement circulaire (74), et
ladite étape consistant à former une fente (76) est effectuée de telle façon que la fente soit positionnée à l'intérieur de ladite ligne de soudure thermique généralement circulaire.

39. Procédé selon l'une quelconque des revendications 33-38 caractérisé de plus par l'étape consistant à :
sceller thermiquement une portion de bord de l'élément de cordon (62) pour renforcer par soudure ce qui sera les extrémités extérieures des éléments de cordon (62b).
